# EUROPÄISCHE PATENTSCHRIFT

(11) **EP 1 485 255 B1**
(45) Veröffentlichungstag und Bekanntmachung des Hinweises auf die Patenterteilung: **15.04.2009**
(21) Anmeldenummer: 03711827.0
(22) Anmeldetag: 19.02.2003
(51) Int. Cl.: B41J 2/44, B41M 5/382

(54) **QUALITÄTSDRUCKVERFAHREN UND DRUCKMASCHINE**
QUALITY PRINTING METHOD AND PRINTING MACHINE
PROCEDE D'IMPRESSION DE QUALITE ET MACHINE D'IMPRESSION

(30) Priorität: 07.03.2002 DE 10210146
(43) Veröffentlichungstag der Anmeldung: 15.12.2004
(73) Patentinhaber: Aurentum Innovationstechnologien GmbH, 55129 Mainz (DE)
(72) Erfinder: LEHMANN, Udo, 64404 Bickenbach (DE); MEYER, Dirk, 67663 Kaiserslautern (DE)
(74) Vertreter: Weber, Roland
(86) Internationale Anmeldenummer: PCT/DE2003/000500
(87) Internationale Veröffentlichungsnummer: WO 2003/074278

(56) Entgegenhaltungen:
- EP-A- 0 530 018
- EP-A- 0 658 443
- WO-A-98/47718
- DE-A- 10 051 850
- US-A- 4 702 958
- US-A- 5 326 619
- PATENT ABSTRACTS OF JAPAN vol. 2002, no. 03, 3. April 2002 (2002-04-03) & JP 2001 315447 A (FUJI PHOTO FILM CO LTD), 13. November 2001 (2001-11-13)

## Beschreibung

Die vorliegende Erfindung betrifft ein Druckverfahren zur Übertragung von flüssiger Drucksubstanz von einem Farbträger auf einen Bedruckstoff, bei dem mit Hilfe einer energieabgebenden Einrichtung, die Energie während einer Prozeßzeit in Form von elektromagnetischen Wellen abgibt, die Drucksubstanz eine Volumen- und/oder Positionsänderung erfährt und beispielsweise dadurch eine Übertragung eines Druckpunktes auf den Bedruckstoff erfolgt, sowie eine Druckmaschine.

Unter einem Druckverfahren wird in erster Linie ein Verfahren zur beliebig häufigen Vervielfältigung von Text- und/oder Bildvorlagen mittels einer Druckform, die nach jedem Abdrucken neu eingefärbt wird, verstanden. Im allgemeinen wird hier zwischen vier grundsätzlich verschiedenen Druckverfahren unterschieden. So ist zum einen das Hochdruckverfahren bekannt, bei dem die druckenden Elemente der Druckform erhaben sind, während die nicht druckenden Teile vertieft sind. Hierzu gehört beispielsweise der Buchdruck und der sogenannte Flexo- oder auch Anilindruck. Des weiteren sind Flachdruckverfahren bekannt, bei denen die druckenden Elemente und die nicht druckenden Teile der Druckform im wesentlichen in einer Ebene liegen. Hierzu gehört beispielsweise der Offsetdruck, bei dem genau genommen die eingefärbte Zeichnung auf der Druckplatte nicht direkt auf den Bedruckstoff gedruckt wird, sondern zuerst auf einen Gummizylinder oder ein Gummituch übertragen wird und von diesem dann erst der Bedruckstoff bedruckt wird. Wenn im folgenden von Bedruckstoff die Rede ist, soll aber sowohl der eigentliche. Bedruckstoff, das heißt das zu bedruckende Material, als auch ein beliebiges Übertragungsmittel, wie z.B. ein Gummizylinder, verstanden werden. Ein drittes Verfahren ist das sogenannte Tiefdruckverfahren, bei dem die druckenden Elemente der Druckform vertieft liegen. Ein industriell angewandtes Tiefdruckverfahren ist der sogenannte Rakeltiefdruck. Schließlich ist noch ein Durchdruckverfahren bekannt, bei dem an den druckenden Stellen die Farbe durch siebartige Öffnungen der Druckform auf den Bedruckstoff übertragen wird.

Diese Druckverfahren zeichnen sich allesamt dadurch aus, daß sie eine mehr oder minder aufwendig erstellte Druckform benötigen, so daß diese Druckverfahren lediglich bei sehr hohen Auflagen, üblicherweise weit über 1000 Stück, wirtschaftlich arbeiten.

Zum Drucken von kleinen Auflagen werden bereits Drucker eingesetzt, die häufig an eine elektronische Datenverarbeitungsanlage angeschlossen werden. Diese verwenden im allgemeinen digital ansteuerbare Drucksysteme, die in der Lage sind, einzelne Druckpunkte auf Bedarf zu drucken. Solche Drucksysteme benutzen verschiedene Verfahren mit unterschiedlichen Drucksubstanzen auf unterschiedlichen Bedruckstoffen. Einige Beispiele von digital ansteuerbaren Drucksystemen sind: Laserdrucker, Thermodrucker und Tintenstrahldrucker. Digitale Druckverfahren zeichnen sich dadurch aus, daß sie keine Druckformen benötigen.

So ist beispielsweise aus der GB 20 07 162 ein elektrothermisches Tintendruckverfahren bekannt, bei dem in einer geeigneten Tintendüse die auf Wasser basierende Tinte durch elektrische Impulse kurzzeitig bis zum Sieden erhitzt wird, so daß sich blitzartig eine Gasblase entwickelt und ein Tintentropfen aus der Düse herausgeschossen wird. Dieses Verfahren ist unter dem Begriff "Bubblejet" allgemein bekannt. Diese thermischen Tintendruckverfahren haben wiederum den Nachteil, daß sie einerseits sehr viel Energie für das Verdrucken eines einzelnen Druckpunktes verbrauchen und andererseits nur für Druckverfahren geeignet sind, die auf Wasserbasis aufbauen. Überdies muß mit der Düse jeder einzelne Druckpunkt getrennt angesteuert werden. Piezoelektrische Tintendruckverfahren leiden dagegen unter dem Nachteil, daß die dabei benötigten Düsen leicht verstopfen, so daß hierfür nur sehr spezielle und teure Farben verwendet werden können.

Aus der DE 197 46 174 ist bekannt, daß ein Laserstrahl durch sehr kurze Pulse in einer Drucksubstanz, die sich in Näpfchen einer Druckwalze befindet, einen Vorgang induziert, so daß die Drucksubstanz eine Volumen- und/oder Positionsänderung erfährt. Dadurch wächst die Drucksubstanz über die Oberfläche der Druckform an und die Übertragung eines Druckpunktes auf einen hieran angenäherten Bedruckstoff ist möglich. Bei diesem Verfahren ist jedoch von Nachteil, daß sich das Befüllen der Näpfchen aufgrund der geringen Näpfchendurchmesser sehr schwierig gestaltet. Daher wird in der DE 100 51 850 vorgeschlagen, die Drucksubstanz im wesentlichen einen durchgehenden Film bildend auf dem Farbträger aufzubringen. Die Energie kann entweder direkt in die Drucksubstanz übertragen werden oder zunächst in eine auf dem Farbträger aufgebrachte Absorptionsschicht, die wiederum die Energie dann an die Drucksubstanz abgibt. Im ersten Fall müssen spezielle Drucksubstanzen verwendet werden, die in der Lage sind, die Energie zu absorbieren. Dies schränkt die Vielfalt der verwendbaren Druckfarben stark ein. Zudem erfolgt die Absorption des Lichtes in der Druckfarbe innerhalb eines relativ großen Volumens, das der Laserstrahl durchtritt. Bei manchen Farben wird zudem die Energie nicht vollständig absorbiert. Die Absorption ist außerdem stark von der verwendeten Drucksubstanz und der aktuellen Dicke der Drucksubstanz auf dem Farbträger abhängig. Aufgrund des relativ großen Volumens, indem die Energie absorbiert wird, muß relativ viel Energie in die Drucksubstanz eingebracht werden, um die für das Setzen eines Druckpunktes notwendige Volumen- und/oder Positionsänderung der Drucksubstanz zu induzieren. Überdies kommt es häufig zu einem Siedeverzug, so daß die Temperatur, bei der sich in der Drucksubstanz Gasblasen bilden, nicht vorhergesagt werden kann. Dies hat zur Folge, daß die Absorption - und die damit verbundene lokale Erhitzung der Drucksubstanz - weitgehend unkontrolliert stattfindet, was u. a. eine starke Variation in der Druckpunktgröße zur Folge hat. Um sicherzustellen, daß in jedem Fall der gewünschte Druckpunkt gesetzt wird, muß daher deutlich mehr Energie in die Drucksubstanz eingeleitet werden als normalerweise für die Induzierung der gewünschten Positions- und/oder Volumenänderung der Drucksubstanz notwendig ist.

Wird dagegen die Drucksubstanz indirekt erwärmt, indem die Energie zunächst in eine Absorptionsschicht eingebracht wird, ist die benötigte Energie im allgemeinen noch höher, da neben der Drucksubstanz nun auch noch die Absorptionsschicht erwärmt werden muß. Zudem ist die Wärmeleitung in der Absorptionsschicht nicht zu vernachlässigen, so daß zwangsläufig ein größeres Gebiet der Absorptionsschicht erwärmt wird, was die benötigte Energie ebenfalls erhöht. Außerdem kommt es bei den bekannten Verfahren häufig sogar zu einer Ablösung der Absorptionsschicht.

Der vorliegenden Erfindung liegt daher die Aufgabe zugrunde, ein Druckverfahren zur Verfügung zu stellen, das eine verbesserte Druckqualität aufweist, das deutlich weniger Energie für das Drucken eines Druckpunktes benötigt, zugleich jedoch eine hohe Druckgeschwindigkeit bei hohem Auflösungsvermögen erlaubt. Des weiteren liegt der vorliegenden Erfindung die Aufgabe zugrunde, eine entsprechende Druckmaschine und eine entsprechende Drucksubstanz zur Verfügung zu stellen, mit der das erfindungsgemäße Druckverfahren verwirklicht werden kann.

Hinsichtlich des Verfahrens wird die Aufgabe dadurch gelöst, daß die Energie mit Hilfe von Absorptionskörpern von der elektromagnetischen Strahlung in die Drucksubstanz übertragen wird und wobei durch die Volumen- und/oder Positionsänderung die Drucksubstanz zunächst auf ein Drucküber tragungsmedium und dann von dem Druckübertragungsmedium auf den Bedruckstoff übertragen wird.

Ohne Absorptionskörper dringt die elektromagnetische Welle weit in die Drucksubstanz ein und wird entlang eines relativ großen Bereichs absorbiert. Um nun die notwendige Volumen- und/oder Positionsänderung der Drucksubstanz zu erreichen, muß ein relativ großer Bereich der Drucksubstanz erwärmt werden, bis sich eine Gasblase bildet. Durch Verwendung von Absorptionskörpern wird erreicht, daß die elektromagnetische Welle im wesentlichen an der Oberfläche des Absorptionskör pers, das heißt auf einem viel kleineren Gebiet, absorbiert wird. Dadurch kommt es bereits bei einem sehr viel geringeren Energieeintrag zu einer punktuellen Erhitzung, so daß die gewünschte Volumen- und/oder Positionsänderung der Drucksubstanz bereits früher stattfindet. Überdies kann allein aufgrund der Anwesenheit der Grenzflächen zwischen Drucksubstanz und Absorptionskörpem, die als eine Art Kristallisationskeim wirken, ein Siedeverzug wirksam verhindert werden.

Durch die Verwendung von Absorptionskörpern kann somit die benötigte Energie drastisch reduziert werden. Zudem kommt es zu einer kontrollierten Positions- und/oder Volumenänderung der Drucksubstanz, die außerdem kaum noch von der verwendeten Drucksubstanz abhängt.

Eine andere bevorzugte Ausführungsform des erfindungsgemäßen Verfahren sieht vor, daß durch die induzierte Positionsänderung ein Teil der Drucksubstanz von dem Farbträger abgelöst wird und anschließend der Farbträger direkt mit dem Bedruckstoff in Kontakt kommt, so daß an denjenigen Stellen, an denen eine Positionsänderung induziert wurde, keine Übertragung von Drucksubstanz auf den Bedruckstoff erfolgt. Mit anderen Worten wird bei dieser Ausführungsform die elektromagnetische Welle auf diejenigen Bereiche gelenkt, die nicht Drucksubstanz übertragen sollen.

Bei einer besonders bevorzugten Ausführungsform der vorliegenden Erfindung werden Absorptionskörper verwendet, die kleiner als die Wellenlänge der elektromagnetischen Wellen sind, vorzugsweise kleiner als ein Zehntel, besonders bevorzugt kleiner als ein Fünfzigstel der Wellenlänge der elektromagnetischen Wellen sind.

Durch die Verwendung derart kleiner Absorptionskörper wird der Absorptionseffekt noch verstärkt, da die Wellen an derart kleinen Körpern nicht mehr gestreut, sondern ausschließlich absorbiert werden.

Mit Vorteil gibt die energieabgebende Einrichtung Energie in Form von Laserlicht ab. Mit Hilfe von hochkohärentem monochromatischem Laserlicht kann mit sehr kurzen Lichtpulsen eine relativ hohe Energiemenge auf eine sehr kleine Fläche abgegeben werden. Dadurch wird die Qualität des Druckbildes und insbesondere die Auflösung erhöht. Ein kurzer Lichtpuls muß nicht notwendigerweise von einem gepulsten Laser herrühren. Es ist vielmehr sogar von Vorteil, wenn statt dessen ein Laser im CW-Betrieb verwendet wird. Die Pulsdauer oder besser die Belichtungszeit hängt dann nicht von der Länge des Laserpulse ab, sondern von der Scangeschwindigkeit des Fokus. Darüber hinaus müssen die zu übertragenden Daten nicht mehr auf die feste Pulsfrequenz synchronisiert werden.

In einer weiteren besonders bevorzugten Ausführungsform ist vorgesehen, daß eine Drucksubstanz verwendet wird, die die Absorptionskörper enthält. Dadurch kann der Bereich, in dem die elektromagnetischen Wellen absorbiert werden, noch weiter reduziert werden, was zu einer weiteren Reduzierung der benötigten Energiezufuhr führt.

Eine weitere besonders bevorzugte Ausführungsform sieht vor, daß die Absorptionskörper im wesentlichen alle Lichtwellenlängen absorbieren. Dadurch ist gewährleistet, daß die Absorption möglichst vollständig erfolgt.

Insbesondere dann, wenn die Absorptionskörper in der Drucksubstanz enthalten sind, kann dies jedoch zur Folge haben, daß nicht alle Farben, insbesondere keine hellen Farben, verwendet werden können, da durch die Zugabe der im wesentlichen alle Lichtwellenlängen absorbierenden Absorptionskörper die Farbe der Drucksubstanz verändert wird.

Daher ist in einer anderen besonders bevorzugten Ausführungsform vorgesehen, daß die Absorptionskörper im wesentlichen nur Strahlung mit einer Wellenlänge oder in einem Wellenlängenbereich absorbieren, die der Wellenlänge oder dem Wellenlängenbereich der von der energieabgebenden Einrichtung abgegebenen elektromagnetischen Wellen entspricht. Die Absorptionskörper filtern somit lediglich das Licht der energieabgebenden Einrichtung aus dem eingefallenen Licht heraus, während alle anderen Lichtwellenlängen ungehindert passieren können, so daß der Einfluß der Absorptionskörper auf die Farbe der Drucksubstanz vernachlässigbar ist. Durch diese Maßnahme kann die Vielfalt der zu verwendeten Drucksubstanzen deutlich erhöht werden, da den Drucksubstanzen lediglich die Absorptionskörper beigefügt werden müssen.

Selbstverständlich ist es auch möglich, durch geeignete Wahl des Wellenlängenbereichs, in dem einfallendes Licht absorbiert wird, die Absorptionskörper auch als Farbstoff bzw. Pigment zu verwenden.

In einer besonders bevorzugten Ausführungsform der vorliegenden Erfindung wird die energieabgebende Einrichtung bzw. der Strahlverlauf der elektromagnetischen Wellen derart angeordnet, daß die Absorptionskörper durch die elektromagnetischen Wellen der energieabgebenden Einrichtung in Richtung des Bedruckstoffes beschleunigt werden. Dadurch wird die Volumen- und/oder Positionsänderung der Drucksubstanz in vorteilhafter Weise unterstützt. Es kommt nämlich allein durch die Beschleunigung der Absorptionskörper zu einer Art Stoßwelle in der Drucksubstanz, so daß in Kombination mit der sich bildenden Gasblase eine definierte Tropfenablösung begünstigt wird. Verwirklicht werden kann dies beispielsweise dadurch, daß der Farbträger transparent ausgeführt wird und der Lichtstrahl von der der Drucksubstanz abgewandten Seite des Farbträgers durch diesen hindurch in die Drucksubstanz fokussiert wird. Es bildet sich dann auf der dem Farbträger zugewandten Seite des Absorptionskörpers explosionsartig eine Gasblase, die für die Beschleunigung des Absorptionskörpers in Richtung des Bedruckstoffes sorgt.

Selbstverständlich ist es nicht unbedingt notwendig, daß die Absorptionskörper in der Drucksubstanz angeordnet sind. Insbesondere bei der Verwendung von transparenten Drucksubstanzen wird erfindungsgemäß ein Farbträger verwendet, auf dessen für die Aufnahme der Drucksubstanz vorgesehenen Fläche Absorptionskörper vorhanden sind, die vorzugsweise eine feste Schicht bilden.

Wesentlich ist lediglich, daß die Drucksubstanz möglichst direkt mit dem Absorptionskörper in Kontakt tritt. Die Drucksubstanz muß die Absorptionskörper jedoch nicht vollständig umgeben. Dadurch, daß die Energie nun nicht mehr in einer Absorptionsschicht, sondern auf einem Absorptionskörper absorbiert wird, kommt es zu nur einer sehr geringen Aufheizung der Umgebung. Es ist somit durch das erfindungsgemäße Verfahren möglich, den - vorzugsweise sehr kleinen - Absorptionskörper gezielt zu erhitzen, ohne daß es zu Verlusten aufgrund von Wärmeleitung kommt.

Dadurch, daß mit Hilfe der Absorptionskörper eine gezielte und reproduzierbare Positions- und/oder Volumenänderung der Drucksubstanz induziert werden kann, kann nun in vorteilhafter Weise die Druckpunktgröße durch die Menge der von der energieabgebenden Einrichtung abgegebenen Energie gesteuert werden. Diese Steuerung kann beispielsweise durch Variation der Prozeßzeit bzw. der Pulsdauer gesteuert werden. Eine solche Steuerung wurde zwar im Prinzip bereits in der DE 100 51 850 vorgeschlagen, war jedoch ohne die Verwendung von Absorptionskörpern nicht praktikabel, da die unkontrollierte Streuung der Druckpunktgröße die Steuerung der Druckpunktgröße über die Pulsdauer überlagert.

Bei der Verwendung von Laserlicht kann die Druckpunktgröße in einer anderen besonders bevorzugten Ausführungsform auch durch das Profil des Laserlichts gesteuert werden. Unter dem Profil des Laserlichts werden verschiedene transversale elektromagnetische Moden TEM verstanden.

Mit Vorteil lassen sich Helligkeitsunterschiede des zu druckenden Bildes durch Variation der Druckpunktgröße verwirklichen.

Bei Versuchen hat sich überraschend gezeigt, daß die besten Druckergebnisse erzielt werden, wenn die Prozeßzeit bzw. die Pulsdauer kleiner als 1 µs, vorzugsweise kleiner als 250 Nanosekunden, besonders bevorzugt kleiner als 100 Nanosekunden und am besten kleiner als 50 Nanosekunden beträgt.

Des weiteren ist es besonders bevorzugt, wenn während der Prozeßzeit bzw. während der Pulsdauer an der Oberfläche des bestrahlten Absorptionskörpers eine Energiedichte größer als 500 kW/cm², vorzugsweise größer als 2 MW/cm² und besonders bevorzugt größer als 10 MW/cm² erzielt wird.

Versuche haben weiterhin gezeigt, daß die beste Druckqualität erreicht werden kann, wenn die bestrahlte Oberfläche des Absorptionskörpers während der Prozeßzeit bzw. Pulsdauer mit einer mittleren Aufheizrate größer als 10⁹ K/s, vorzugsweise größer als 10¹⁰ K/s, besonders bevorzugt größer als 10" K/s erhitzt werden.

Durch die zuletzt genannten Maßnahmen kommt es zu einer sehr schnellen, punktgenauen Erhitzung des Absorptionskörpers, so daß - im Gegensatz zu den Verfahren des Standes der Technik - eine Stoßwelle und keine Schallwelle erzeugt wird, die zu einer deutlichen Verbesserung der Druckqualität führt.

Die vorstehenden Maßnahmen zur Verbesserung der Druckqualität beruhen unter anderem auch auf einem neuartigem Rasterverfahren, welches bei der vorliegenden Erfindung vorzugsweise verwendet wird, welches im Prinzip aber auch von den übrigen Merkmalen der vorliegenden Erfindung unabhängig anwendbar ist. Dieses besteht aus einer Zeilenrasterung, bei welcher der Druck zeilenweise erfolgt und die einzelnen Zeilen einen sehr dichten Abstand zueinander haben und sich im Idealfall gerade berühren, so daß in vertikaler Richtung die Auflösung durch den Zeilenabstand bzw. die Zeilen breite gegeben ist. In horizontaler Richtung ist dagegen kein festes Punktraster vorgesehen. Statt dessen bestehen die "Pixel" in horizontaler Richtung aus unterschiedlich langen Liniensegmenten der jeweiligen Rasterzeile mit beliebigem Anfangs- und Endpunkt. Die Abtastung der einzelnen Linien erfolgt vorzugsweise mit einem Dauerstrichlaser, der einfach nach Bedarf ausgeblendet bzw. abgeschaltet oder in seiner Energie reduziert wird, um einzelne Abschnitte der Rasterzeile nicht zu drucken, wohingegen die Liniensegmente dort gedruckt werden, wo der Laser nicht ausgeblendet bzw. nicht abgeschaltet ist. Dabei wird aber der Laser selbst im Prinzip kontinuierlich im Dauerstrich weiterbetrieben. Die Länge eines gedruckten Zeilensegmentes hängt einfach von der Länge der Einschaltzeit bzw. Einblendzeit des Lasers auf der jeweiligen Zeile ab. Eine Druckzeile besteht daher aus einer Folge von im allgemeinen unterschiedlich langen Liniensegmenten, deren Länge einfach durch die Einschaltzeit des Lasers bestimmt ist, wobei die einzelnen Liniensegmente eine im wesentlichen kontinuierlich gleichbleibende Linienbreite haben, die idealerweise genau dem Abstand benachbarter Abtastzeilen entspricht oder auch geringfügig größer (oder kleiner) sein kann.

Diese Linien haben allerdings an ihren Enden kleine "Ausläufe" bzw. "Abrundungen", die der Anstiegszeit bzw. Abfallzeit des Lasers beim Ein- bzw. Ausschalten oder beim Ein- bzw. Ausblenden entsprechen. Lediglich dann, wenn die Einschaltdauer bzw. Belichtungsdauer für ein konkretes Liniensegment kürzer wird als die Anstiegszeit und/oder Abfallzeit an den Enden der jeweiligen Liniensegmente, wird mit der entsprechend reduzierten Länge der gedruckten "Linie" auch deren Breite reduziert, so daß bei extrem kurzen Einschaltzeiten nur Punkte gedruckt werden und bei unterschiedlichen Einschaltzeiten im Bereich der Anstiegs- und Abfallszeiten Punkte unterschiedlicher Größe bzw. unterschiedlichen Durchmessers unterhalb der Linienbreite bedruckt werden können. Auf diese Weise kann man im Prinzip beliebige und sehr feine Grauabstufungen erzeugen.

Die Lage der einzelnen Liniensegmente, d. h. insbesondere deren Anfang und Ende, ist dabei nicht durch irgendein Raster festgelegt, sondern kann beliebig variiert werden. Insofern ist das entsprechende Druckverfahren genaugenommen nur in vertikaler Richtung, d. h. senkrecht zum Verlauf der einzelnen Druckzeilen gerastert, während innerhalb der Zeilen ein "kontinuierliches" Drucken erfolgt, d. h. es wird im Prinzip eine kontinuierliche Linie gedruckt, die aber an beliebigen Stellen und mit beliebigen Längen unterbrochen werden kann, so daß die gedruckten Zeilenabschnitte entsprechende Liniensegmente konstanter Breite und beliebig wählbarer Länge sind. Erst dann, wenn die Länge dieser Liniensegmente vergleichbar mit ihrer Breite oder noch kürzer wird, wird auch die Breite dieser Linien reduziert, so daß dann die entsprechenden Liniensegmente zu einzelnen Punkten verkürzt sind, die auch in ihrem in Breitenrichtung der Linien gemessenen Durchmesser durch weitere Reduzierung der Einschaltzeit des Lasers noch reduziert werden können.

Der verwendete Laser ist vorzugsweise ein phasengekoppelter oder ein CW-Laser mit einer mittleren Leistung von mehr als 10 Watt und einem Strahlparameter M²<1,5. Das "Ein" und "Ausschalten" des Lasers erfolgt zweckmäßigerweise über einen Pulsweitenmodulator in Kombination mit einem geeigneten Laserschalter (z. B. AOM, EOM). Allerdings wird in der bevorzugten Variante der Erfindung der Laserstrahl nicht vollständig "abgeschaltet", sondern nur in seiner Energie bzw. Energiedichte unter einen Schwellenwert reduziert, unterhalb dessen es nicht zu einer Ablösung von Farbtropfen von dem Druckträger kommt. Zum Beispiel erfolgt eine Reduzierung der Laserleistung auf 15 % des für einen vollen Druckpunkt verwendeten Wertes. Dies vereinfacht die Steuerung und Kontrolle der Laserenergie beim Drucken, insbesondere wird dadurch eine bessere und effektivere Nutzung der Laserschalter bzw. -Modulatoren ermöglicht. Im Falle der Verwendung eines AOM-"Schalters" kann deshalb der Laser in der 0. Ordnung genutzt werden, während herkömmliche Anwendungen von AOM-Schaltem die 1. Beugungsordnung des Schalters nutzen müssen . Mit Vorteil weist der Laser eine Wellenlänge zwischen 0,5 µm und 3 µm auf.

Zusätzlich sollte die Dicke der Drucksubstanz auf dem Farbträger kleiner als 50 µm, vorzugsweise kleiner als 30 µm, besonders bevorzugt kleiner als 20 µm gewählt werden. Die Dicke der Drucksubstanzschicht sollte aber 5 µm nicht unterschreiten. Der optimale Bereich liegt zwischen 10 und 15 µm.

Mit Vorteil wird die Drucksubstanz derart ausgewählt, daß die Viskosität zwischen 0,05 und 0,5 Pas liegt.

Die benötigte Energie kann noch weiter gesenkt werden, wenn Absorptionskörper und Drucksubstanz derart ausgewählt werden, daß die Absorptionskörper von der Drucksubstanz möglichst gut benetzt werden. Dadurch ist sichergestellt, daß die auf den Absorptionskörper aufgebrachte Energie möglichst direkt in die Drucksubstanz abgeführt wird.

Hinsichtlich der Druckmaschine wird die eingangs genannte Aufgabe mittels einer Druckmaschine zum Bedrucken eines Bedruckstoffes gelöst, die einen Farbträger und eine energieabgebende Einrichtung aufweist, die derart angeordnet ist, daß Energie gezielt auf bestimmte Bereiche des Farbträgers übertragen werden kann, wobei Absorptionskörper für das Absorbieren der Energie vorgesehen sind, und daß flüssige Drucksubstanz von dem Farbträger auf ein Druckübertragungsmedium auf den Bedruckstoff übertragen werden kann. Die energieabgebende Einrichtung ist vorzugsweise ein Laser.

Mit Vorteil haben die Absorptionskörper eine Größe kleiner als 1 µm, vorzugsweise kleiner als 200 Nanometer und besonders bevorzugt eine Größe zwischen 10 und 50 Nanometern. Durch derart kleine Absorptionskörper ist gewährleistet, daß nahezu keine Lichtstreuung auftritt. Die Absorptionskörper bestehen vorzugsweise aus Rußpartikeln.

Mit Vorteil sind die Absorptionskörper in einer auf dem Farbträger aufgebrachten Absorptionsschicht angeordnet.

In einer besonders bevorzugten Ausführungsform beträgt der Anteil der Absorptionskörper in der Absorptionsschicht mehr als 40 Gew.-%, vorzugsweise mehr als 70 Gew.-% und besonders bevorzugt mehr als 90 Gew.-%.

In einer anderen besonders bevorzugten Ausführungsform besteht die Absorptionsschicht aus gepreßten Absorptionskörpem.

Die Absorptionskörper können auch in eine organische oder anorganische Polymermatrix, wie z. B. Polysilikate aber auch Epoxidharz, eingebettet sein. Zudem ist es möglich, die Absorptionskörper in eine Elastomermatrix, beispielsweise Gummi, einzubetten. Dadurch ist sichergestellt, daß die Absorptionskörper weitgehend getrennt voneinander angeordnet sind.

Eine zweckmäßige Ausführungsform sieht vor, daß der Farbträger aus transparentem Polymerband (Polyesther) besteht, da dann eine gute Benetzbarkeit für Drucksubstanzen auf alkoholischer, wässriger oder auf aromatischer Lösungsmittelbasis besteht.

Die Absorptionskörper haben mit Vorteil eine Größe kleiner als 1 µm, vorzugsweise kleiner als 200 nm und besonders bevorzugt zwischen 10 und 50 nm.

Bei besonders bevorzugten Ausführungsformen der Drucksubstanz besteht die Drucksubstanz aus Bindemittel, Farbstoff bzw. Pigment, Lösungsmittel, Additiven sowie den Absorptionskörpem.

In einer weiteren besonders bevorzugten Ausführungsform bildet der Absorptionskörper den Farbstoff, d.h. der Absorptionskörper hat ein Eigenfrequenzband im Sichtbaren, so daß selektiv bestimmte Frequenzbereich absorbiert werden.

Eine weitere vorteilhafte Ausführungsform sieht vor, daß die Drucksubstanz ein Treibmittel aufweist. Ein Treibmittel ist ein Mittel, das bei relativ niedriger Temperatur siedet, so daß sich bereits bei einer niedrigen Temperatur Gasblasen bilden. Dadurch kann eine weitere Reduzierung der zuzuführenden Energie erreicht werden. Besonders geeignet sind Drucksubstanzen, die bei einer Temperatur ≤ 100°C sieden. Mit Vorteil wird das Treibmittel zugleich als Lösungsmittel verwendet. Als Treibmittel kommen u. a Alkohole, Ester, Ketone und Wasser in Frage. Bei lösungsmittelfreien Farben, z. B. Offsetfarben oder UV-Farben, werden zweckmäßigerweise Treibmittel zugesetzt.

Zweckmäßigerweise wird mehr als 10 gew %, vorzugsweise mehr als 12 gew % und besonders bevorzugt mehr als 15 gew % Treibmittel beigefügt. Insgesamt sollte der Treibmittelanteil jedoch unter 30 gew % betragen.

Erfindungsgemäß wird die beschriebene Drucksubstanz in dem beschriebenen erfindungsgemäßen Druckverfahren und/oder in der beschriebenen erfindungsgemäßen Druckmaschine verwendet.

In der bevorzugten Ausführungsform der Erfindung weist die Druckmaschine einen Druckträger auf, welcher eine aus Vertiefungen und Erhebungen bestehende Oberflächenstruktur hat, die derart ausgestaltet ist, daß sie zumindest teilweise fokussierend auf eine auf oder unmittelbar über der Oberfläche des Farbträgers erzeugte Stoßwelle wirkt. Diese Mikrostrukturen, z.B. Vertiefungen oder Erhebungen, sollen zum einen kleiner sein als ein typischer Laserstrahldurchmesser, der für die Erzeugung der Stoßwelle durch lokales Aufheizen der Drucksubstanz verwendet wird und sie sollten vor allem in mindestens einer Dimension periodisch angeordnet sein, wobei die Periode ebenfalls einen kürzeren Wiederholabstand hat als dem typischen Durchmesser des Laserstrahls entspricht. Dabei reicht es im übrigen aus, wenn auch die Mikrostrukturierung im wesentlichen nur in einer Dimension vorliegt, das heißt, wenn die Mikrostrukturen z.B. aus Rillen bzw. Rippen besteht, die typischerweise senkrecht zur Abtastrichtung des Laserstrahls verlaufen. Vorzugsweise haben die Vertiefungen oder Erhebungen einen Durchmesser bzw. Abstand in der Größenordnung von 30 µ und kleiner, vorzugsweise kleiner als 15 µ. Die Fokussierwirkung wird dabei für die Druckwellen in ähnlicher Weise erreicht wie für elektromagnetische, insbesondere optische Wellen. Konkret sind also leicht konkave Formen, z.B. Rillen mit elliptischem oder konkavem, eventuell auch kreisförmigem Querschnitt vorgesehen, wobei die Fokussierrichtung möglichst senkrecht zu der einhüllenden Oberfläche des Farbträgers verlaufen sollte, damit die durch eine entsprechend gerichtete Stoßwelle im wesentlichen senkrecht zur einhüllenden Oberfläche des Farbträgers abgestoßenen Farbtröpfchen einen möglichst kurzen Weg zu dem Bedruckstoff haben und dadurch die geringstmögliche Divergenz haben.

Die genaue Ausgestaltung der Vertiefungen hängt unter anderem auch von der Einstrahlrichtung des Laserstrahls ab und davon, ob der Laserstrahl auf eine Absorptionsschicht gerichtet wird oder ob Absorptionskörper in der Druckfarbe selbst enthalten sind.

Zu beachten ist dabei, wie bereits erwähnt, daß, im Gegensatz zum Stand der Technik, der teilweise auch bereits Oberflächenstrukturen zeigt, die erfindungsgemäßen Oberflächenstrukturen wesentlich kleinere charakteristische Dimensionen haben, so daß also ein konkreter Druckpunkt in der Regel mehrere benachbarte Strukturelemente umfaßt.

Die Fokussierwirkung konkreter Strukturen kann man auch theoretisch nach den Regeln der Optik bzw. der optischen Reflexion und/oder Brechung ermitteln. Durch Auftreffen eines Laserstrahls im Bereich entsprechender Strukturelemente findet eine sehr plötzliche lokale Erhitzung und/oder Verdampfung des Treibmittels der Drucksubstanz statt, so daß sich eine explosionsartige Druckwelle am Ort der Erhitzung ausbildet. Diese Druckwelle wird entweder am Grund des Farbträgers selbst erzeugt oder aber dort reflektiert, so daß man auf dieser Basis die vorzugsweise Ausrichtung und Fokussierung der Druckwelle bei einer gegebenen Oberflächenstruktur bereits gut abschätzen kann. Dabei sind zwar kleinere Streuanteile nie völlig zu vermeiden, diese fallen jedoch in der Regel nicht ins Gewicht, zumal dann nicht, wenn aufgrund der geringen Energie dieses Streuanteils diese Energie nicht zur Ablösung kleiner Farbtröpfchen ausreicht oder wenn im übrigen die Oberflächenspannung des Farbtropfens ausreicht, diesen im wesentlichen zusammenzuhalten und im wesentlichen nur in Hauptrichtung der Stoßwelle abzulösen.

Dabei ist die Mikrostrukturierung und die Begrenzung der Mikrostrukturen auf charakteristische Maße, die noch kleiner sind als der Durchmesser des über den Farbträger hinweggescannten Laserstrahls auch deshalb von Bedeutung, weil, im Gegensatz zum Stand der Technik, der Nachfluß von Farbe in die Mikrostrukturen möglichst unbehindert und möglichst schnell erfolgen soll. Aufgrund der kleinen Größe der Mikrostrukturen ist die Farbschicht auch immer dicker als die Tiefe der Mikrostrukturen, so daß schon aus diesem Grund die einzelnen Vertiefungen über die Farbschicht zusammenhängen.

Es versteht sich, daß auch gezielt periodisch und auf kleinem Maßstab angebrachte Erhebungen so ausgestaltet werden können, daß sie eine entsprechende Fokussierwirkung haben.

Zusätzliche vorteilhafte Ausgestaltungen sind in den Unteransprüchen angegeben.

Weitere Vorteile, Merkmale und Anwendungsmöglichkeiten der vorliegenden Erfindung werden deutlich anhand der folgenden Beschreibung bevorzugter Ausführungsformen sowie der zugehörigen Figuren. Es zeigen:
- Figuren 1a-1c: eine schematische Darstellung des Funktionsprinzips einer ersten Ausführungsform des Verfahrens,
- Figuren 2a+b: eine schematische Darstellung der Funktion eines Verfahrens des Standes der Technik,
- Figuren 3a+b: eine schematische Darstellung eines vorteilhaften Effekts der ersten Ausführungs- form des erfindungsgemäßen Druckverfahrens,
- Figuren 4a-4c: eine schematische Verdeutlichung von einer zweiten Ausführungsform des erfin- dungsgemäßen Verfahrens,
- Figuren 5a+b: eine schematische Darstellung des Einflusses der korrekten Energieparameter,
- Figuren 6a+b: eine schematische Darstellung der Beeinflussung der Druckpunktgröße,
- Figur 7: eine schematische Darstellung des Einflusses der Mikrostruktur auf den Druckpunkt,
- Figur 8: eine schematische Darstellung des Einflusses lichtfokussierender Elemente,
- Figuren 9a+b: beispielhafte Anordnungen der lichtfokussierenden Elemente,
- Figur 10: eine weitere Ausführungsform in einer "Negativ"-Anordnung und
- Figur 11: eine weitere Ausführungsform mit einem zusätzlichen, zwischengeschalteten Farb- träger.

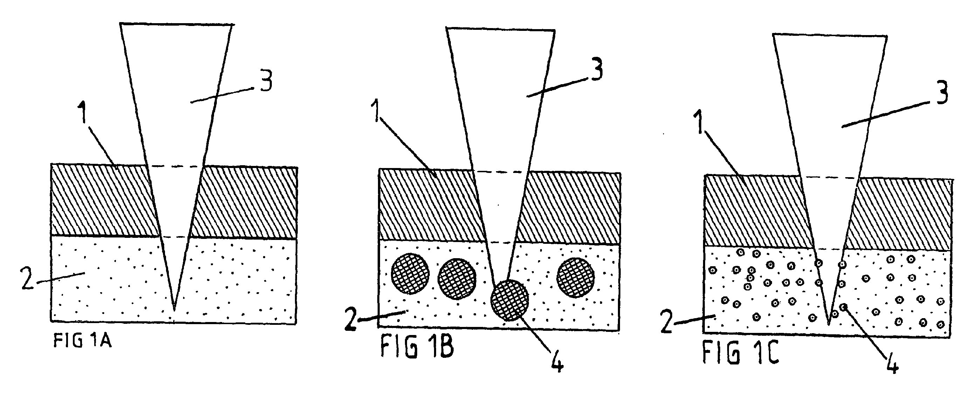

In Figur 1a ist schematisch die Situation bei einem Druckverfahren des Standes der Technik dargestellt. Ein Laserstrahl 3 wird durch den Farbträger 1 in die Drucksubstanz 2 fokussiert. Der Laserstrahl dringt somit durch den Farbträger in die Drucksubstanz ein und wird über einen großen Bereich absorbiert. Dies führt dazu, daß der Energiebedarf für das Verdrucken eines Punktes sehr hoch ist, was den Druckprozeß verlangsamt und damit die Druckgeschwindigkeit reduziert.

In Figur 1b ist schematisch eine erste Ausführungsform des erfindungsgemäßen Druckverfahrens dargestellt. Hier sind in die Drucksubstanz 2 Absorptionskörper 4 eingebracht. Der Laserstrahl 3 sorgt hier nun dafür, daß sich die Oberfläche des Absorptionskörpers 4 stark erhitzt, so daß die durch den Laserstrahl 3 eingebrachte Energie im wesentlichen zu einer punktförmigen Erhitzung des Absorptionskörpers 4 führt. Absorptionskörper 4 und Drucksubstanz 2 sind in vorteilhafter Weise derart ausgewählt, daß die Drucksubstanz 2 die Absorptionskörper 4 sehr gut benetzt, so daß die Absorptionskörper 4 und die Drucksubstanz 2 eine homogene Suspension ergeben. Durch die im wesentlichen punktförmige Erhitzung der Absorptionskörper 4 wird eine im wesentlichen punktförmige Erhitzung der Drucksubstanz 2 an der Stelle erreicht, an der die Drucksubstanz 2 den Absorptionskörper 4 benetzt. In der in Figur 1b gezeigten Ausführungsform haben die Absorptionskörper eine mittlere Größe von ca. 1 µm.

In Figur 1c ist im wesentlichen dieselbe Situation wie in Figur 1b dargestellt, nur daß hier die Absorptionskörper sehr viel kleiner, nämlich sehr viel kleiner als Laserlichtwellenlänge sind. Durch die sehr viel kleineren Absorptionskörper 4 wird der Absorptionseffekt noch verstärkt, da beim Auftreffen des Lichtstrahls 3 auf einen Absorptionskörper 4 nur noch Lichtabsorption und keine Lichtstreuung mehr zum Tragen kommt.

Die gute Benetzung der Absorptionskörper 4 durch die Drucksubstanz kann beispielsweise dadurch erreicht werden, daß sowohl Absorptionskörper 4 als auch die Drucksubstanz 2 polar ausgeführt werden, z. B. kann ein Alkohol als Lösungsmittel verwendet werden. Aufgrund der elektrostatischen Anziehungskraft führt dies automatisch zu einer guten Benetzung. Ist hingegen die Drucksubstanz weniger polar ausgeführt, wenn beispielsweise Benzol oder Toluol als Lösungsmittel verwendet wird, dann sollten auch die Absorptionskörper möglichst unpolar sein, um eine gute Benetzung zu gewährleisten.

Insbesondere bei dunklen Drucksubstanzen 2 kann der Absorptionskörper 4 so ausgebildet sein, daß er Licht mit im wesentlichen allen Lichtwellenlängen absorbiert. Dadurch wird erreicht, daß eine möglichst vollständige Absorption des abgegebenen Laserlichts durch die Absorptionskörper erfolgt. Es ist jedoch auch möglich, den Absorptionskörper 4 derart auszubilden, daß er nur Licht der entsprechenden Laserwellenlänge absorbiert. Als Alternative dazu können die Absorptionskörper 4 auch Licht ganzer Wellenlängenbereiche absorbieren, so daß die Absorptionskörper 4 gleichzeitig als Farbstoff bzw. Pigment verwendet werden.

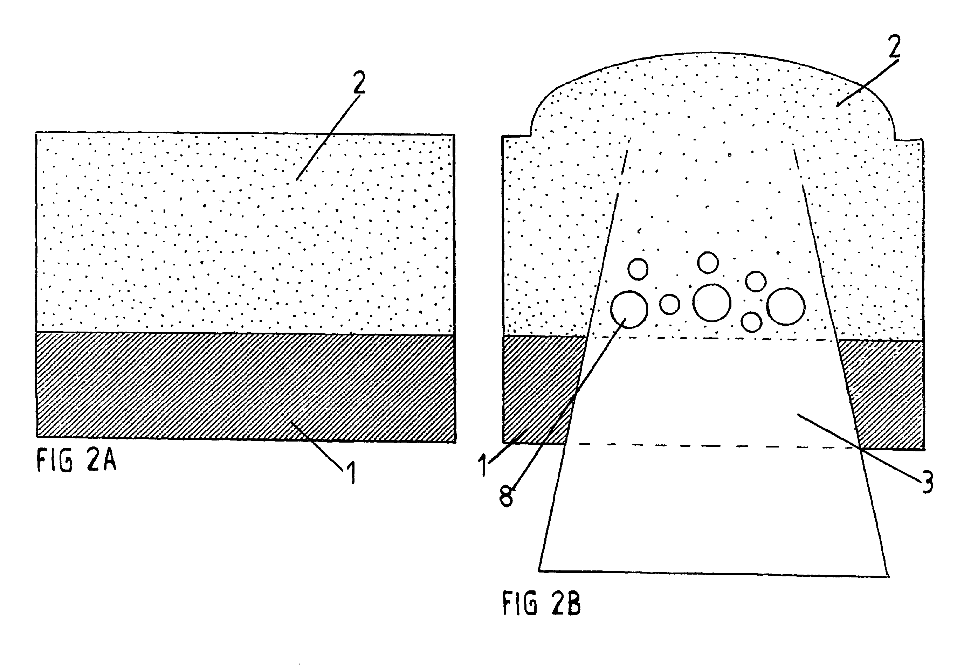

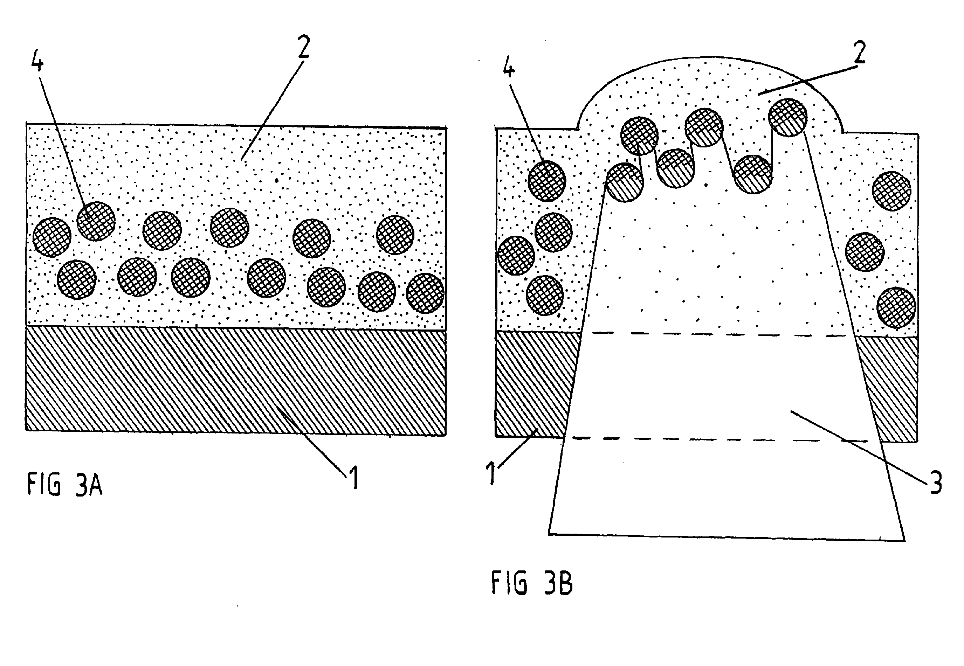

Ein weiterer Vorteil, der durch die Verwendung der Absorptionskörper 4 erzielt wird, wird anhand der Figuren 2a und 2b im Vergleich mit den Figuren 3a und 3b verdeutlicht. In den Figuren 2a und 2b ist erneut ein aus dem Stand der Technik bekannte Druckverfahren schematisch dargestellt. In Figur 2a ist zu erkennen, daß auf dem Farbträger 1 die Drucksubstanz 2 aufgebracht ist. Wird nun, wie in Figur 2b gezeigt ist, ein Laserstrahl 3 durch den Farbträger 1 in die Drucksubstanz fokussiert, so entstehen in der Drucksubstanz 2 Dampfblasen 8. Da keine Absorptionskörper 4 vorhanden sind, wird die Energie des Laserstrahls 3 über einen großen Bereich absorbiert, so daß der Energiebedarf sehr hoch ist. Die entstehenden Dampfblasen 8 geben darüber hinaus einen Druckimpuls im wesentlichen in alle Richtungen ab, was zu unkontrollierten Störungen in der Bewegung der Drucksubstanz 2 führen kann, so daß sich im allgemeinen kein definierter Tropfen ablösen kann, sondern die Drucksubstanz unkontrolliert versprüht wird.

Befinden sich daher, wie in Figur 3a dargestellt ist, Absorptionskörper 4 in der Drucksubstanz 2, wird weniger thermische Energie für das Herausschleudern eines Tropfens aus der Drucksubstanz 2 benötigt. Dies liegt daran, daß zum einen die thermische Energie im wesentlichen auf der Oberfläche der Absorptionskörper 4, also innerhalb eines sehr kleinen Volumens, absorbiert wird, und zum anderen die Oberfläche der Absorptionskörper 4 eine Art "Kristallisationskeim" bilden, der kontrolliert für die Gasblasenbildung sorgt. Wie in Figur 3b gezeigt wird, entsteht beim Bestrahlen der Absorptionskörper 4 mit einem Laserstrahl 3 auf der Seite der Absorptionskörper 4, auf die der Laserstrahl 3 auftritt, eine definierte Blasenbildung, die wiederum den Absorptionskörper im wesentlichen in eine Richtung, nämlich in Richtung des eingestrahlten Laserstrahls, beschleunigt. Durch diese Bewegung der Absorptionskörper 4 wird die definierte Volumen- und/oder Positionsänderung der Drucksubstanz 2 noch unterstützt, so daß eine definierte Tropfenablösung begünstigt wird. Insgesamt wird der Druckprozeß deutlich verkürzt und kann mit sehr viel weniger Energie durchgeführt werden.

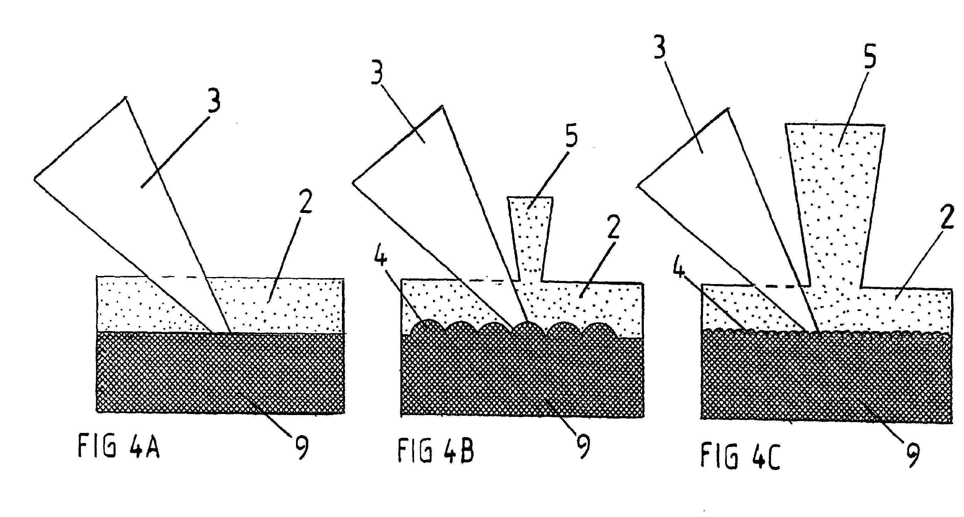

In den Figuren 4a bis 4c ist eine zweite Ausführungsform des erfindungsgemäßen Verfahrens dargestellt. In Figur 4a ist erneut schematisch ein Druckverfahren aus dem Stand der Technik dargestellt. Hier wird ein Laserstrahl 3 durch die Drucksubstanz 2 auf eine Absorptionsschicht 4 geleitet, die auf einem (nicht gezeigten) Farbträger aufgebracht ist. Durch den Laserstrahl 3 wird die Absorptionsschicht 4 deutlich erwärmt. Dies erfolgt jedoch nicht nur punktförmig, da sich die Wärme relativ schnell in der Absorptionsschicht ausbreiten kann.

Erfindungsgemäß wird daher vorgeschlagen, daß, wie in Figur 4b und 4c gezeigt ist, die Absorptionsschicht 4 Absorptionskörper 8 aufweist. Auch hier wird durch die Absorptionskörper 8 erreicht, daß die Wärme im wesentlichen auf einen lokalen Bereich begrenzt fokussiert wird, so daß in sehr kurzer Zeit mit relativ wenig Energie das Herauslösen eines Tropfens aus der Drucksubstanz 2 erzielt werden kann, wie durch den Druckfarbenjet 5 symbolisiert wird.

Auch bei dieser Ausführungsform ist mit Vorteil darauf zu achten, daß die auf bzw. in der Absorptionsschicht 9 vorgesehenen Absorptionskörper gut von der Drucksubstanz 2 benetzt werden. Die Absorptionskörper 4 werden auch hier möglichst klein gewählt, das heißt, möglichst sehr viel kleiner als 1 µm im Durchmesser, und können beispielsweise aus Rußpartikeln bestehen.

Um eine möglichst gute und weitgehend punktförmige Absorption zu erzielen, ist der Anteil der Absorptionskörper 4 in der Absorptionsschicht 9 möglichst hoch. Mit Vorteil besteht die Absorptionsschicht 9 sogar vollständig aus gepreßten Absorptionskörpern. Es ist auch möglich, die Absorptionskörper in eine organische oder anorganische Polymermatrix oder in eine Elastomermatrix, wie z.B. Gummi, einzubetten.

Dadurch, daß das Laserlicht direkt von dem Absorptionskörper absorbiert wird und nur eine sehr geringe Wärmemenge an benachbarte Absorptionskörper bzw. die Absorptionsschicht übertragen wird, genügt im allgemeinen bereits eine Energie von weniger als 5 µJ für einen Druckpunkt mit einem Durchmesser von > 200 µm. Für einen Druckpunkt mit einem Durchmesser < 40 µm genügt sogar eine Energie µJ. Im Vergleich dazu benötigt ein elektrothermisches Heizelement, wie es beispielsweise in dem eingangs erwähnten Bubblejet verwendet wird, für einen Druckpunkt mit einem Durchmesser von ca. 100 µm zwischen 20 und 30 µJ Energie. Der Energieverbrauch bei der direkten Laserabsorption, das heißt bei einem Druckverfahren ohne Absorptionskörper, ist die benötigte Energie je Druckpunkt im allgemeinen noch höher.

Die Drucksubstanz 2 kann entweder in Näpfchen oder in anderen regelmäßigen Strukturen vorhanden sein, wie es beispielsweise aus der eingangs erwähnten DE 197 46 174 bekannt ist, oder auch als homogener Farbfilm ausgelegt sein. Der Vorteil des durchgehenden homogenen Farbfilms liegt daran, daß der Laserstrahl nicht in vorgegebene Strukturen, wie dies beispielsweise durch die Näpfchen erfolgt, gelenkt werden muß, sondern unabhängig auf jede beliebige Position gerichtet werden kann, so daß das Druckverfahren auflösungsunabhängig arbeitet. Ohne Verwendung von Näpfchen oder dergleichen wird jedoch der Drucksubstanz die Führung genommen, so daß die Druckpunkte etwas an Schärfe verlieren. Um dennoch von einer im wesentlichen glatten Farboberfläche definierte Tropfen durch direkten Laserbeschuß ablösen zu können, wird erfindungsgemäß neben der Verwendung von Absorptionskörpern, die wie beschrieben die definierte Ablösung eines Druckpunktes mit niedriger Energie ermöglichen, noch weitere Bedingungen eingehalten. So muß die Farbviskosität, die Farbschichtdicke, die Laserbelichtungszeit, die Laserenergie und die Laserenergiedichte im Fokus sowie das richtige Treibmittelverhältnis in der Drucksubstanz eingestellt werden. Wenn die Belichtungszeit sehr kurz gehalten werden kann, das heißt sehr viel kleiner als 1 µs, und die Prozeßenergie im Laserfokus deutlich über dem Schwellenwert (sehr viel größer als 500 kW/cm²) bei einer Laserwellenlänge von ca. 1 µm liegt, erfolgt das Herausschießen eines Tropfens aufgrund der sehr hohen Aufheizrate in so kurzer Zeit, daß sich eine Stoßwelle senkrecht zur Oberfläche in Richtung Bedruckstoff ausbreitet und die benachbarte Drucksubstanz aufgrund ihrer Massenträgheit eine Art Führung ist.

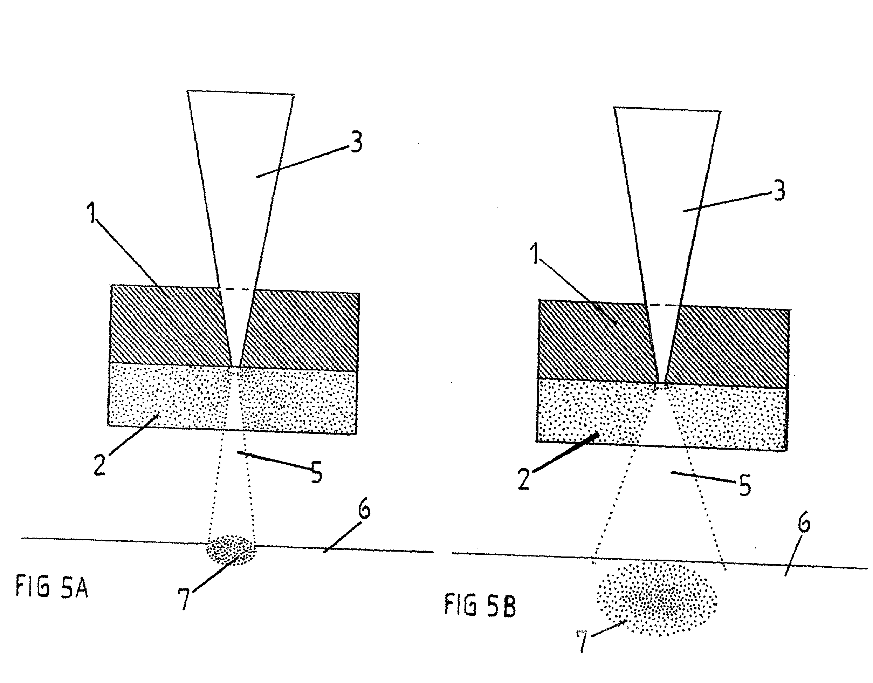

Dies ist in den Figuren 5a und 5b noch einmal verdeutlicht worden. In der Figur 5a ist die Situation gezeigt, bei der die angegebenen Druckparameter eingehalten werden. Der Laserstrahl 3 wird in die Drucksubstanz 2 fokussiert, so daß sich ein Tropfen 5 aus der Drucksubstanz 2 herauslöst und auf dem Bedruckstoff 6 einen definierten scharfen Druckpunkt 7 erzeugt. Im Gegensatz dazu ist in Figur 5b die Situation gezeigt, bei der die gegebenen Parameter nicht eingehalten werden. Da hier die eingebrachte Energie deutlich höher ist und die gesamte Umgebung des Fokusses mit aufgeheizt wird, kommt es hier zu einem unkontrollierten Herausschleudem eines Tropfens 5, so daß sich auf dem Bedruckstoff 6 ein wesentlich größerer Druckpunkt 7 bildet.

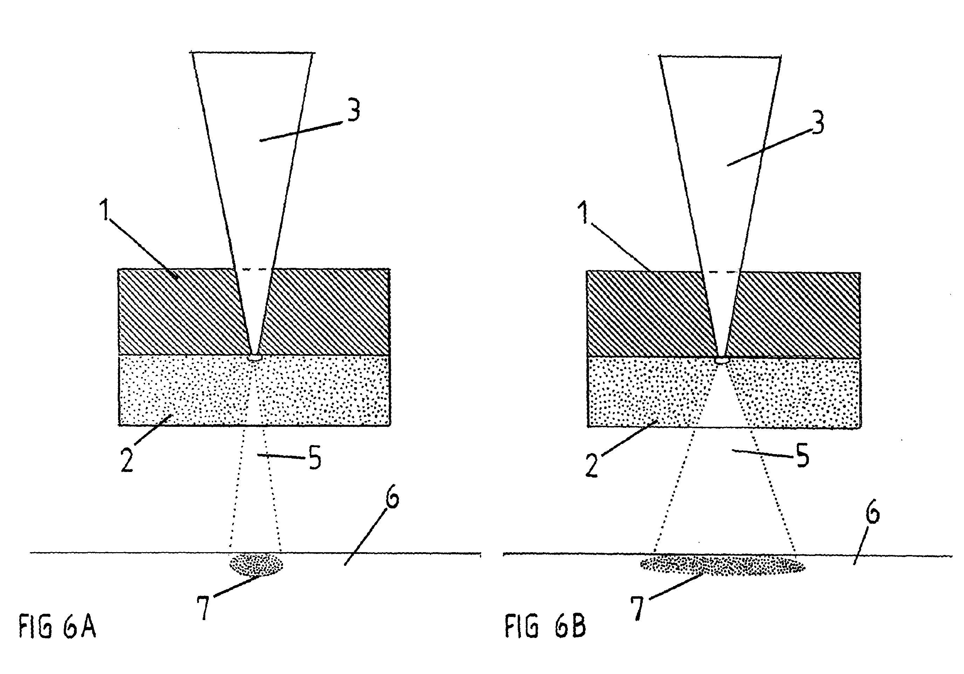

In den Figuren 6a und 6b ist gezeigt, wie erfindungsgemäß durch Variation einzelner Druckparameter die Druckpunktgröße verändert werden kann. Versuche haben nämlich gezeigt, daß die Größe des Druckpunkts und die Farbdichte des Druckpunkts mit ansteigender Belichtungszeit, das heißt mit der Pulsdauer des Lasers, ansteigt. Die Größe des Druckpunktes kann somit in nahezu unendlich kleinen Schritten variiert werden. Helligkeitsunterschiede in dem zu druckenden Bild können daher durch Druckpunkte unterschiedlicher Größe dargestellt werden. Insgesamt gelingt es, durch das erfindungsgemäße Druckverfahren, das Druckbild deutlich zu verbessern. Die Auflösung kann nahezu beliebig erhöht werden, da das Druckverfahren an keinerlei vorgegebenes Raster gebunden ist.

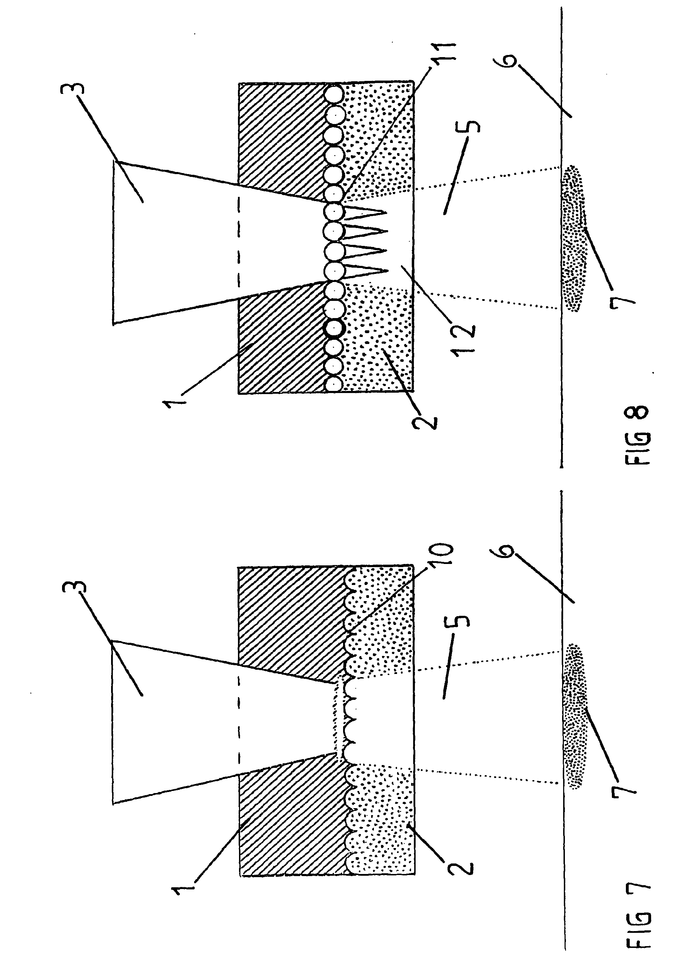

Figur 7 zeigt eine weitere bevorzugte Ausführungsform der Erfindung. Deutlich zu erkennen ist, daß der Farbträger 1 eine Oberfläche mit Vertiefungen und/oder Erhebungen aufweist. Die Vertiefungen sind hier in Form von Rillen 10 aufgebracht. Die Vertiefungen und/oder Erhebungen 10 haben vorzugsweise einen Durchmesser kleiner als 25 µm. Auch die Tiefe bzw. Höhe der Vertiefungen und/oder Erhebungen ist vorzugsweise kleiner als 25 µm. Die Struktur ist somit extrem fein. Die Drucksubstanz bildet auf der Struktur des Farbträgers eine durchgehende Oberfläche, wie ebenfalls in Figur 6 zu erkennen ist. Der Laserstrahle 3 dringt von hinten durch den transparenten Farbträger 1. Die in den Farbträger 1 aufgebrachte Mikrostruktur, die auch die Form von Näpfchen und/oder Rillen haben kann, stellt sicher, daß die durch die Absorptionskörper vermittelte Stoßwelle möglichst senkrecht zur Oberfläche des Farbträgers 1 verläuft. Überraschenderweise wurde in mehreren Versuchen festgestellt, daß durch geeignete "Aufrauhung" der Oberfläche des Farbträgers die Qualität des erzeugten Druckpunktes 7 auf dem Bedruckstoff 6 erheblich gesteigert werden kann.

Gleichzeitig kann eine nahezu beliebig feine Auflösung erreicht werden. Dies ist ein wesentliches Unterscheidungsmerkmal dieser Ausführungsform von denjenigen Druckverfahren im Stand der Technik, die Näpfchen auf dem Farbträger verwenden. Die bekannten Näpfchen sind nämlich deutlich größer, so daß sich die Drucksubstanz ausschließlich in den Näpfchen befindet (eventuell überstehende Drucksubstanz wird abgerakelt). Im Gegensatz dazu ist hier die Mikrostruktur so gewählt, daß die Drucksubstanz über die Struktur hinweg eine kontinuierliche Schicht bildet. Die Struktur ist also vollständig von der Drucksubstanz bedeckt.

Die Mikrostruktur ist in einer besonders bevorzugte Ausführungsform unregelmäßig aufgebaut, d.h. die einzelnen Vertiefungen und/oder Erhebungen variieren in ihrer Ausdehnung und Tiefe. Mit Vorteil wird eine Variation von etwa 10 - 50% der Dimension der Vertiefung und/oder Erhebung gewählt. Zweckmäßigerweise werden die Erhebungen und/oder Vertiefungen so gestaltet, daß die bei Auftreffen der elektromagnetischen Welle erzeugte Stoßwelle vorteilhaft geformt wird, so daß sich ein möglichst sauberer Druckpunkt bildet.

In Figur 8 ist eine weitere Ausführungsform der vorliegenden Erfindung gezeigt. Hier sind auf dem Farbträger 1 lichtfokussierende Elemente 11 aufgebracht. Diese lichtfokussierenden Elemente bilden eine Mikrooptik, die dafür sorgt, daß der einfallende fokussierte Lichtstrahl noch einmal in mehrere kleine Foki 10, sogenannte Hotspots, aufgeteilt wird. Dies hat zur Folge, daß die Energiedichte punktuell weiter erhöht wird, so daß die insgesamt einzubringende Energie noch weiter abgesenkt werden kann. Die einzelnen lichtfokussierenden Elemente 11 sind kleiner als der Fokus des Lasers, d.h. kleiner als 30 µm, vorzugsweise kleiner als 15 µm und besonders bevorzugt kleiner als 10 µm. Die lichtfokussierenden Elemente können bei der in Figur 7 gezeigten Anordnung mit einem transparentem Farbträger 1 prinzipiell sowohl auf der der Drucksubstanz 2 abgewandten Seite des Farbträgers 1 als auch auf der mit Drucksubstanz 2 benetzten Seite des Farbträgers 1 angeordnet sein. Selbstverständlich können die lichtfokussierenden Elemente auch in den Farbträger 1 integriert werden.

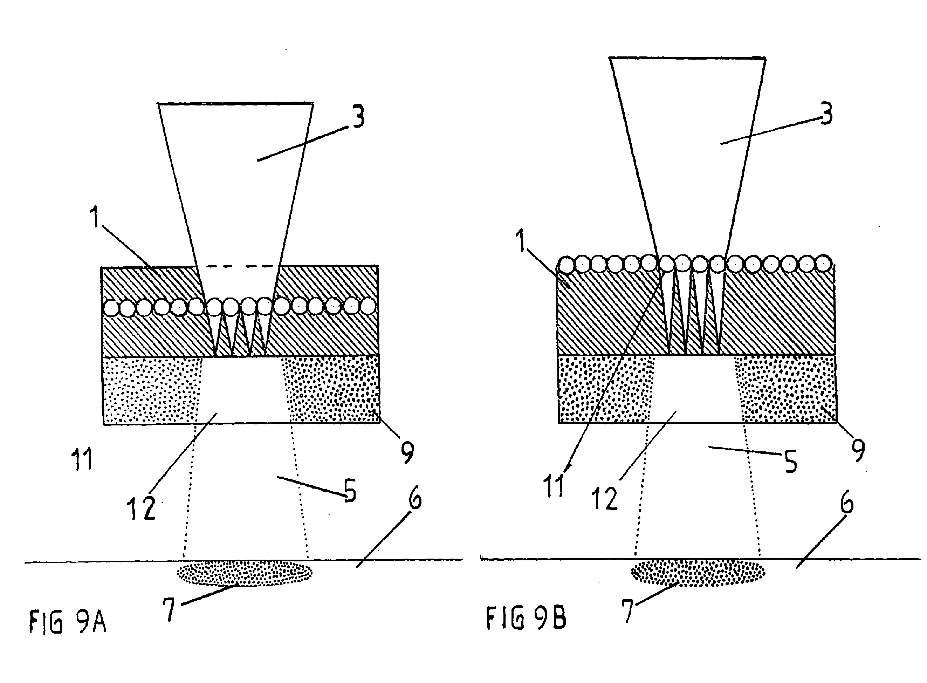

Die Figuren 9a und 9b zeigen Ausführungsformen mit unterschiedlichen Anordnungen der lichtfokussierenden Elemente 11.

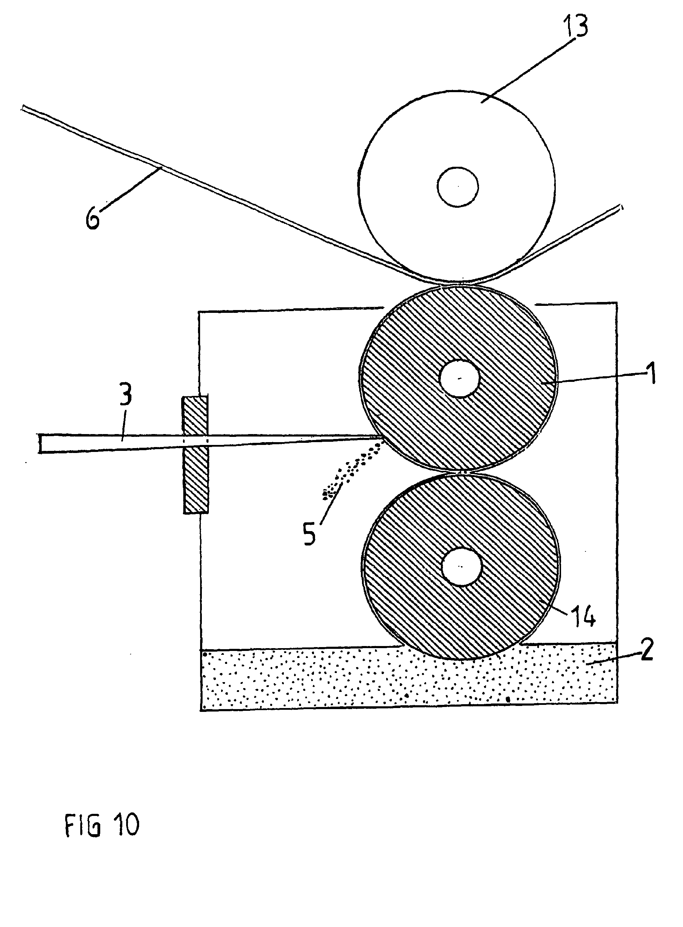

In Figur 10 ist schließlich noch eine "negative" Anordnung des erfindungsgemäßen Druckverfahren dargestellt. Zu erkennen ist der Laserstrahl 3, der auf den Farbträger 1 fokussiert wird. Der zylindrische Farbträger 1 ist einerseits mit einer Tauchwalze 14 in Kontakt, die wiederum in ein Bad mit Drucksubstanz 2 eintaucht. Beim Rotieren der Tauchwalze und des Farbträgers 1 wird sichergestellt, daß die Oberfläche des Farbträgers 1 mit Drucksubstanz 2 überzogen wird.

Mittels des Laserstrahls 3 werden punktuell einzelne Gebiete der Drucksubstanzschicht von dem Farbträger entfernt. Da der Farbträger 1 zusätzlich mit dem über eine Andruckwalze 13 laufenden Bedruckstoff in Kontakt tritt, wird derjenige Teil der Drucksubstanz, der nicht von dem Laser entfernt wurde, auf den Bedruckstoff 6 übertragen. Im Gegensatz zu dem eingangs beschriebenen Verfahren wird hier der Laser auf die Gebiete fokussiert, die nicht zur Übertragung der Drucksubstanz beitragen sollen.

Es versteht sich, daß die zusätzlichen Merkmale der beschriebenen Ausführungsformen auch mit Vorteil in anderen Druckverfahren bzw. in anderen Druckmaschinen verwirklicht werden können.

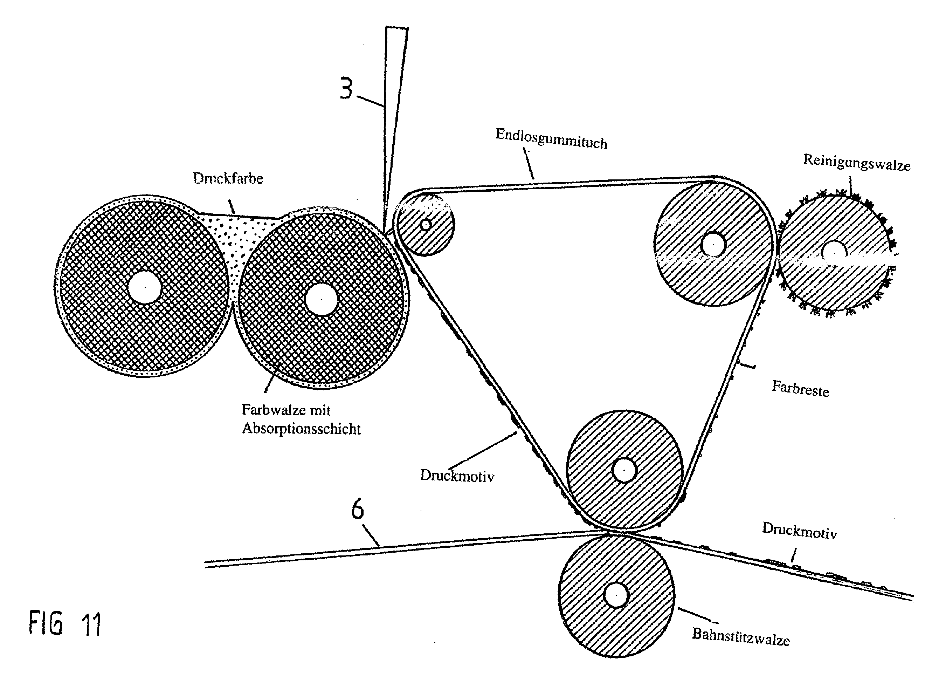

Figur 11 zeigt schließlich eine weitere Ausführungsform der vorliegenden Erfindung, bei welcher zwischen einer Farbwalze mit Absorptionsschicht, auf welche der Laser gerichtet wird, und dem über eine Stützwalze geführten Druckmaterial bzw. der zu bedruckenden Bahn ein über mehrere Rollen geführtes Endlostuch als Druckübertragungsmedium vorgesehen ist. Dabei kann es sich insbesondere um ein Gummituch handeln, wobei Gummitücher die günstige Eigenschaft haben, daß sie über besonders enge Krümmungsradien geführt werden können.

Die der Farbwalze gegenüberliegend angeordnete Stütz- oder Trägerwalze für das Gummituch kann dann einen relativ kleinen Durchmesser haben, so daß es möglich ist, den Laser unter einem relativ steilen Winkel und dennoch in sehr dichter Nachbarschaft zu dem Gummituch auf die Absorptionsschicht der Farbwalze auftreffen zu lassen, so daß die dadurch abgelösten Farbtropfen nur eine sehr kurze Flugstrecke haben, bevor sie auf das Gummituch gelangen. Das Gummituch wird dann über eine Druckwalze geführt, die einer Stützwalze für die Druckbahn gegenüberliegt, so daß die Farbe von dem Gummituch auf die Druckbahn übertragen werden kann.

Etwaige, nach dem Druckvorgang noch auf dem Gummituch haftende Farbreste werden anschließend durch eine Reinigungswalze abgetragen.

## Patentansprüche

1. Druckverfahren zur Übertragung von flüssiger Drucksubstanz (2) von einem Farbträger (1) auf einen Bedruckstoff (6), bei dem mit Hilfe einer energieabgebenden Einrichtung, die Energie während einer Prozeßzeit in Form von elektromagnetischen Wellen (3) abgibt, die Drucksubstanz (2) eine Volumen- und/oder Positionsänderung erfährt, wobei mit Hilfe von Absorptionskörpern (4) Energie von der elektromagnetischen Welle (3) in die Drucksubstanz (2) übertragen wird, **dadurch gekennzeichnet, daß** durch die Volumen- und/oder Positionsänderung die Drucksubstanz zunächst auf ein Druckübertragungsmedium und dann von dem Druckübertragungsmedium auf den Bedruckstoff (6) übertragen wird.

2. Druckverfahren nach Anspruch 1, **dadurch gekennzeichnet, daß** das Druckübertragungsmedium ein Endlostuch, vorzugsweise ein Gummituch ist.

3. Druckverfahren nach Anspruch 1 oder 2, **dadurch gekennzeichnet, daß** Absorptionskörper (4) verwendet werden, die kleiner als die Wellenlänge der elektromagnetischen Wellen (3) ist, vorzugsweise kleiner als 1/10, besonders bevorzugt kleiner als 1/50 der Wellenlänge der elektromagnetischen Wellen (3) ist.

4. Druckverfahren nach einem der Ansprüche 1 bis 3, **dadurch gekennzeichnet, daß** die Einrichtung Energie in Form von Laserlicht (3) abgibt.

5. Druckverfahren nach einem der Ansprüche 1 bis 4, **dadurch gekennzeichnet, daß** eine Drucksubstanz (2) verwendet wird, die Absorptionskörper (4) enthält.

6. Druckverfahren nach einem der Ansprüche 1 bis 5, **dadurch gekennzeichnet, daß** die Absorptionskörper (4) im wesentlichen alle Lichtwellenlängen absorbieren.

7. Druckverfahren nach einem der Ansprüche 1 bis 5, **dadurch gekennzeichnet, daß** die Absorptionskörper (4) im wesentlichen nur die Strahlung mit einer Wellenlänge oder in einem Wellenlängenbereich absorbiert, die der Wellenlänge oder dem Wellenlängenbereich der von der energieabgebenden Einrichtung abgegebenen elektromagnetischen Wellen 3 entspricht.

8. Druckverfahren nach Anspruch 7, **dadurch gekennzeichnet, daß** die Absorptionskörper (4) auch als Farbstoff verwendet werden.

9. Druckverfahren nach einem der Ansprüche 7 oder 8, **dadurch gekennzeichnet, daß** die Absorptionskörper (4) durch die elektromagnetischen Wellen (3) der energieabgebenden Einrichtung in Richtung Bedruckstoff (6) beschleunigt werden.

10. Druckverfahren nach einem der Ansprüche 1 bis 6, **dadurch gekennzeichnet, daß** ein Farbträger (1) verwendet wird, auf dessen für die Aufnahme der Drucksubstanz (2) vorgesehenen Fläche Absorptionskörper (4) vorhanden sind, die vorzugsweise eine feste Schicht bilden.

11. Druckverfahren nach einem der Ansprüche 1 bis 10, **dadurch gekennzeichnet, daß** die Druckpunktgröße durch die Menge der von der energieabgebenden Einrichtung freigegebenen Energie gesteuert wird.

12. Druckverfahren nach Anspruch 11, **dadurch gekennzeichnet, daß** die Menge der von der energieabgebenden Einrichtung freigegebenen Energie durch die Prozeßzeit gesteuert wird.

13. Druckverfahren nach einem der Ansprüche 4 bis 12, **dadurch gekennzeichnet, daß** die Druckpunktgröße durch das Profil des Laserlichts gesteuert wird.

14. Druckverfahren nach einem der Ansprüche 1 bis 13, **dadurch gekennzeichnet, daß** Helligkeitsunterschiede des zu druckenden Bildes durch Variation der Druckpunktgröße verwirklicht werden.

15. Druckverfahren nach einem der Ansprüche 1 bis 14, **dadurch gekennzeichnet, daß** die Prozeßzeit kleiner als 1 µs, vorzugsweise kleiner als 250 ns, besonders bevorzugt kleiner als 100 ns und am besten kleiner als 50 ns beträgt.

16. Druckverfahren nach einem der Ansprüche 1 bis 15, **dadurch gekennzeichnet, daß** während der Prozeßzeit am Absorptionskörper (4) eine Energiedichte größer als 500 kW/cm², vorzugsweise größer als 2 MW/cm², besonders bevorzugt größer als 10 MW/cm² erzeugt wird.

17. Druckverfahren nach einem der Ansprüche 1 bis 16, **dadurch gekennzeichnet, daß** die Absorptionskörper (4) während der Prozeßzeit mit einer mittleren Aufheizrate größer als 10⁹ K/s, vorzugsweise größer als 10¹⁰ K/s, besonders bevorzugt größer als 10¹¹ K/s erhitzt werden.

18. Druckverfahren nach einem der Ansprüche 1 bis 17, **dadurch gekennzeichnet, daß** die Dicke der Drucksubstanz (2) auf dem Farbträger kleiner als 50 µm, vorzugsweise kleiner als 30 µm, besonders bevorzugt kleiner als 20 µm gewählt wird.

19. Druckverfahren nach einem der Ansprüche 1 bis 18, **dadurch gekennzeichnet, daß** die Drucksubstanz (2) derart ausgewählt wird, daß die Viskosität zwischen 0,05 und 0,5 Pas liegt.

20. Druckverfahren nach einem der Ansprüche 1 bis 19, bei dem Absorptionskörper (4) und Drucksubstanz (2) derart ausgewählt werden, daß die Absorptionskörper (4) von der Drucksubstanz (2) möglichst gut benetzt werden.

21. Druckverfahren nach einem der Ansprüche 1 bis 20, **dadurch gekennzeichnet, daß** für die Erzeugung eines Druckpunktes mit einem Durchmesser von größer als 100 µm eine Energie von nicht mehr als 10 µJ, vorzugsweise nicht mehr als 5 µJ übertragen wird.

22. Druckverfahren nach einem der Ansprüche 1 bis 21, **dadurch gekennzeichnet, daß** der Druck zeilenweise erfolgt, wobei zu druckende Bereiche innerhalb einer Zeile durch Liniensegmente beliebig wählbarer Länge und beliebig wählbarer Position gebildet werden.

23. Druckverfahren nach Anspruch 22, **dadurch gekennzeichnet, daß** das zeilenweise Drucken mit Hilfe eines Dauerstrichlasers erfolgt, der zeilenweise nach einem gegebenen Raster die Druckzeilen abfährt und der entlang einer Zeile beliebig ein- und ausschaltbar bzw. einblendbar oder ausblendbar ist.

24. Druckmaschine zum Bedrucken eines Bedruckstoffes mit einem Farbträger (1) und einer energieabgebenden Einrichtung, die derart angeordnet ist, daß Energie gezielt auf bestimmte Bereiche des Farbträgers (1) übertragen werden kann, wobei Absorptionskörper (4) für das Absorbieren der Energie vorgesehen sind, **dadurch gekennzeichnet, daß** die Druckmaschine derart angeordnet ist, daß flüssige Drucksubstanz von dem Farbträger auf ein Druckübertragungsmedium und vom Druckübertragungsmedium auf den Bedruckstoff übertragen werden kann.

25. Druckmaschine nach Anspruch 24, **dadurch gekennzeichnet, daß** die energieabgebende Einrichtung ein Laser ist.

26. Druckmaschine nach Anspruch 24 oder 25, **dadurch gekennzeichnet, daß** die Absorptionskörper (4) eine Größe haben, die kleiner als 1 µm, vorzugsweise kleiner als 200 nm und besonders bevorzugt eine Größe zwischen 10 und 50 nm haben.

27. Druckmaschine nach Anspruch 26, **dadurch gekennzeichnet, daß** die Absorptionskörper aus Rußpartikeln und/oder Titannitrid bestehen.

28. Druckmaschine nach einem der Ansprüche 24 bis 26, **dadurch gekennzeichnet, daß** die Absorptionskörper (4) in einer auf dem Farbträger (1) angeordneten Absorptionsschicht (9) angeordnet sind.

29. Druckmaschine nach Anspruch 28, **dadurch gekennzeichnet, daß** der Farbträger (1) walzenförmig ist und die Absorptionsschicht (9) auf dem Farbträger fixiert ist.

30. Druckmaschine nach Anspruch 28, **dadurch gekennzeichnet, daß** die Absorptionsschicht (9) in Form eines flexiblen Bandes auf dem Farbträger (1) angeordnet ist.

31. Druckmaschine nach einem der Ansprüche 28 bis 30, **dadurch gekennzeichnet, daß** der Anteil der Absorptionskörper (4) in der Absorptionsschicht (5) größer als 40 Gew.-%, vorzugsweise größer als 70 Gew.-% und besonders bevorzugt größer als 90 Gew.-% beträgt.

32. Druckmaschine nach einem der Ansprüche 28 bis 31, **dadurch gekennzeichnet, daß** die Absorptionsschicht (9) aus gepreßten Absorptionskörpern (4) besteht.

33. Druckmaschine nach einem der Ansprüche 28 bis 32, **dadurch gekennzeichnet, daß** die Absorptionskörper (4) in einer organischen oder anorganischen Polymermatrix eingebettet sind.

34. Druckmaschine nach einem der Ansprüche 28 bis 33, **dadurch gekennzeichnet, daß** die Absorptionskörper (4) in einer Elastomermatrix, vorzugsweise in Gummi, eingebettet sind.

35. Druckmaschine nach einem der Ansprüche 24 bis 34, **dadurch gekennzeichnet, daß** der Farbträger (1) eine Oberflächenstruktur aufweist, die aus Vertiefungen und/oder Erhebungen besteht.

36. Druckmaschine nach Anspruch 35, **dadurch gekennzeichnet, daß** die Vertiefungen und/oder Erhebungen einen Durchmesser kleiner als 30 µm, vorzugsweise kleiner als 15 µm haben.

37. Druckmaschine nach Anspruch 35 oder 36, **dadurch gekennzeichnet, daß** die Vertiefungen und/oder Erhebungen einen Durchmesser größer als 2 µm haben.

38. Druckmaschine nach einem der Ansprüche 35 bis 37, **dadurch gekennzeichnet, daß** die Vertiefungen und/oder Erhebungen unterschiedliche Durchmesser haben.

39. Druckmaschine nach einem der Ansprüche 35 bis 38, **dadurch gekennzeichnet, daß** die Vertiefungen und/oder Erhebungen rillenförmig sind.

40. Druckmaschine nach einem der Ansprüche 35 bis 39, **dadurch gekennzeichnet, daß** die Vertiefungen und/oder Erhebungen auf einer Absorptionsschicht, die die Absorptionskörper enthält, angeordnet sind.

41. Druckmaschine nach einem der Ansprüche 24 bis 40, **dadurch gekennzeichnet, daß** auf dem Farbträger Licht fokussierende Elemente aufgebracht sind.

42. Druckmaschine nach Anspruch 41, **dadurch gekennzeichnet, daß** die lichtfokussierenden Elemente einen Durchmesser kleiner als 30 µm, vorzugsweise kleiner als 10 µm haben.

43. Druckmaschine nach Anspruch 41 oder 42, **dadurch gekennzeichnet, daß** der Farbträger transparent ist und die lichtfokussierenden Elemente in den Farbträger integriert sind.

44. Druckmaschine nach einem der Ansprüche 41 bis 43, **dadurch gekennzeichnet, daß** die lichtfokussierenden Elemente von einer flexiblen Polymerfolie gebildet werden.

## Claims

1. Printing process for the transfer of liquid printing substance (2) from an ink carrier (1) to an imprinting material (6), in which, with the help of an energy-emitting apparatus, which, during a process period, emits energy in the form of electromagnetic waves (3), the printing substance (2) undergoes a change in volume and/or position, wherein, with the help of absorption bodies (4), energy is transferred from the electromagnetic waves (3) into the printing substance (2), **characterized in that** through the change in volume and/or position the printing substance is first transferred to a print transfer medium and then from the print transfer medium onto the imprinting material (6).

2. Printing process according to claim 1, **characterized in that** the print transfer medium is an endless cloth, preferably a rubber cloth.

3. Printing process according to claim 1 or 2, **characterized in that** absorption bodies (4) are used which are smaller than the wavelength of the electromagnetic waves (3), preferably smaller than 1/10, particularly preferably smaller than 1/50 of the wavelength of the electromagnetic waves (3).

4. Printing process according to one of claims 1 to 3, **characterized in that** the apparatus emits energy in the form of laser light (3).

5. Printing process according to one of claims 1 to 4, **characterized in that** a printing substance (2) is used which contains absorption bodies (4).

6. Printing process according to one of claims 1 to 5, **characterized in that** the absorption bodies (4) absorb essentially all the light wavelengths.

7. Printing process according to one of claims 1 to 5, **characterized in that** the absorption bodies (4) absorb essentially only the radiation with a wavelength or in a wavelength range which corresponds to the wavelength or wavelength range of the electromagnetic waves 3 emitted by the energy-emitting apparatus.

8. Printing process according to claim 7, **characterized in that** the absorption bodies (4) are also used as dye.

9. Printing process according to one of claims 7 or 8, **characterized in that** the absorption bodies (4) are accelerated in the direction of the imprinting material (6) by the electromagnetic waves (3) of the energy-emitting apparatus.

10. Printing process according to one of claims 1 to 6, **characterized in that** an ink carrier (1) is used, on whose surface provided to receive the printing substance (2) absorption bodies (4) are present which preferably form a solid layer.

11. Printing process according to one of claims 1 to 10, **characterized in that** the printing-point size is controlled by the quantity of energy released by the energy-emitting apparatus.

12. Printing process according to claim 11, **characterized in that** the quantity of energy released by the energy-emitting apparatus is controlled by the process period.

13. Printing process according to one of claims 4 to 12, **characterized in that** the printing-point size is controlled by the profile of the laser light.

14. Printing process according to one of claims 1 to 13, **characterized in that** differences in brightness of the image to be printed are achieved by variation of the printing-point size.

15. Printing process according to one of claims 1 to 14, **characterized in that** the process period is shorter than 1 µs, preferably shorter than 250 ns, particularly preferably shorter than 100 ns and best of all shorter than 50 ns.

16. Printing process according to one of claims 1 to 15, **characterized in that** during the process period an energy density higher than 500 kW/cm², preferably higher than 2 MW/cm², particularly preferably higher than 10 MW/cm², is generated at the absorption body (4).

17. Printing process according to one of claims 1 to 16, **characterized in that** the absorption bodies (4) are heated during the process period with an average heating rate greater than 10⁹ K/s, preferably greater than 10¹⁰ K/s, particularly preferably greater than 10¹¹ K/s.

18. Printing process according to one of claims 1 to 17, **characterized in that** the chosen thickness of the printing substance (2) on the ink carrier is less than 50 µm, preferably less than 30 µm, particularly preferably less than 20 µm.

19. Printing process according to one of claims 1 to 18, **characterized in that** the printing substance (2) is selected so that the viscosity lies between 0.05 and 0.5 Pas.

20. Printing process according to one of claims 1 to 19, in which absorption bodies (4) and printing substance (2) are selected so that the absorption bodies (4) are wetted as well as possible by the printing substance (2).

21. Printing process according to one of claims 1 to 20, **characterized in that**, for the production of a printing point with a diameter greater than 100 µm, an energy of not more than 10 µJ, preferably not more than 5 µJ, is transferred.

22. Printing process according to one of claims 1 to 21, **characterized in that** printing is line-by-line, areas to be printed within a line being formed by line segments of any choosable length and any choosable position.

23. Printing process according to claim 22, **characterized in that** the line-by-line printing takes place with a continuous wave laser, which travels line-by-line down the lines of print following a preset raster and which can be switched on and off or revealed or masked as desired along a line.

24. Printing machine for printing on an imprinting material with an ink carrier (1) and an energy-emitting apparatus, which is arranged such that energy can be transferred in a targeted manner onto certain areas of the ink carrier (1), wherein absorption bodies (4) are provided for absorbing the energy, **characterized in that** the printing machine is arranged such that liquid printing substance can be transferred from the ink carrier to a print transfer medium and from the print transfer medium onto the imprinting material.

25. Printing machine according to claim 24, **characterized in that** the energy-emitting apparatus is a laser.

26. Printing machine according to claim 24 or 25, **characterized in that** the absorption bodies (4) are of a size which is smaller than 1 µm, preferably smaller than 200 nm and particularly preferably are of a size between 10 and 50 nm.

27. Printing machine according to claim 26, **characterized in that** the absorption bodies consist of carbon black particles and/or titanium nitride.

28. Printing machine according to one of claims 24 to 26, **characterized in that** the absorption bodies (4) are arranged in an absorption layer (9) arranged on the ink carrier (1).

29. Printing machine according to claim 28, **characterized in that** the ink carrier (1) is cylindrical and the absorption layer (9) is fixed on the ink carrier.

30. Printing machine according to claim 28, **characterized in that** the absorption layer (9) is arranged on the ink carrier (1) in the form of a flexible strip.

31. Printing machine according to one of claims 28 to 30, **characterized in that** the proportion of the absorption bodies (4) in the absorption layer (5) is greater than 40 wt.-%, preferably greater than 70 wt.-% and particularly preferably greater than 90 wt.-%

32. Printing machine according to one of claims 28 to 31, **characterized in that** the absorption layer (9) consists of pressed absorption bodies (4).

33. Printing machine according to one of claims 28 to 32, **characterized in that** the absorption bodies (4) are embedded in an organic or inorganic polymer matrix.

34. Printing machine according to one of claims 28 to 33, **characterized in that** the absorption bodies (4) are embedded in an elastomer matrix, preferably in rubber.

35. Printing machine according to one of claims 24 to 34, **characterized in that** the ink carrier (1) has a surface structure which consists of recesses and/or elevations.

36. Printing machine according to claim 35, **characterized in that** the recesses and/or elevations have a diameter smaller than 30 µm, preferably smaller than 15 µm.

37. Printing machine according to claim 35 or 36, **characterized in that** the recesses and/or elevations have a diameter greater than 2 µm.

38. Printing machine according to one of claims 35 to 37, **characterized in that** the recesses and/or elevations have different diameters.

39. Printing machine according to one of claims 35 to 38, **characterized in that** the recesses and/or elevations are groove-shaped.

40. Printing machine according to one of claims 35 to 39, **characterized in that** the recesses and/or elevations are arranged on an absorption layer which contains the absorption bodies.

41. Printing machine according to one of claims 24 to 40, **characterized in that** light-focussing elements are applied to the ink carrier.

42. Printing machine according to claim 41, **characterized in that** the light-focussing elements have a diameter smaller than 30 µm, preferably smaller than 10 µm.

43. Printing machine according to claim 41 or 42, **characterized in that** the ink carrier is transparent and the light-focussing elements are integrated into the ink carrier.

44. Printing machine according to one of claims 41 to 43, **characterized in that** the light-focussing elements are formed by a flexible polymer film.

## Revendications

1. Procédé d'impression pour transférer une substance (2) d'impression liquide d'un chromophore (1) sur une matière (6) à imprimer, au cours duquel la substance (2) d'impression subit une modification de volume et/ou de position à l'aide d'un dispositif qui dégage de l'énergie sous la forme d'ondes électromagnétiques (3) pendant un temps de processus, l'énergie passant de l'onde électromagnétique (3) dans la substance (2) d'impression à l'aide de corps absorbants (4), **caractérisé en ce que** grâce à la modification de volume et/ou de position, la substance d'impression passe d'abord sur un médium de transfert d'impression puis du médium de transfert d'impression sur la matière (6) à imprimer.

2. Procédé d'impression selon la revendication 1, **caractérisé en ce que** le médium de transfert d'impression est un drap sans fin, de préférence un drap en caoutchouc.

3. Procédé d'impression selon la revendication 1 ou 2, **caractérisé en ce que** des corps absorbants (4) plus petits que la longueur des ondes électromagnétiques (3), de préférence plus petits que 1/10, en particulier de préférence plus petits que 1/50 de la longueur des ondes électromagnétiques (3) sont utilisés.

4. Procédé d'impression selon l'une des revendications 1 à 3, **caractérisé en ce que** le dispositif dégage de l'énergie sous forme de lumière laser (3).

5. Procédé d'impression selon l'une des revendications 1 à 4, **caractérisé en ce qu'**une substance (2) d'impression contenant des corps absorbants (4) est utilisée.

6. Procédé d'impression selon l'une des revendications 1 à 5, **caractérisé en ce que** les corps absorbants (4) absorbent essentiellement toutes les longueurs d'onde lumineuse.

7. Procédé d'impression selon l'une des revendications 1 à 5, **caractérisé en ce que** les corps (4) absorbants n'absorbent que le rayonnement d'une longueur d'onde ou dans une gamme d'ondes équivalente à la longueur ou à la gamme des ondes (3) dégagées par le dispositif dégageant de l'énergie.

8. Procédé d'impression selon la revendication 7, **caractérisé en ce que** les corps absorbants (4) sont aussi utilisés comme colorant.

9. Procédé d'impression selon l'une des revendications 7 ou 8, **caractérisé en ce que** les corps (4) absorbants sont accélérés en direction de la matière (6) à imprimer grâce aux ondes électromagnétiques (3) du dispositif dégageant de l'énergie.

10. Procédé d'impression selon l'une des revendications 1 à 6, **caractérisé en ce qu'**un chromophore (1) est utilisé, sur la face duquel prévue pour recevoir la substance (2) d'impression, des corps (4) absorbants sont présents, lesquels forment de préférence une couche dure.

11. Procédé d'impression selon l'une des revendications 1 à 10, **caractérisé en ce que** la taille du point d'impression est régie par la quantité d'énergie libérée par le dispositif dégageant de l'énergie.

12. Procédé d'impression selon la revendication 11, **caractérisé en ce que** la quantité d'énergie libérée par le dispositif dégageant de l'énergie est régie par le temps de processus.

13. Procédé d'impression selon l'une des revendications 4 à 12, **caractérisé en ce que** la taille du point d'impression est régie par le profil de la lumière laser.

14. Procédé d'impression selon l'une des revendications 1 à 13, **caractérisé en ce que** des différences de clarté de l'image à imprimer sont restituées par variation de la taille du point d'impression.

15. Procédé d'impression selon l'une des revendications 1 à 14, **caractérisé en ce que** le temps de processus est inférieur à 1 µs, de préférence inférieur à 250 ns, en particulier de préférence inférieur à 100 ns et au mieux inférieur à 50 ns.

16. Procédé d'impression selon l'une des revendications 1 à 15, **caractérisé en ce qu'**une densité d'énergie supérieure à 500 kW/cm², de préférence supérieure à 2 MW/cm², en particulier de préférence supérieure à 10 MW/cm² est générée au corps absorbant (4) pendant le temps de processus.

17. Procédé d'impression selon l'une des revendications 1 à 16, **caractérisé en ce que** les corps absorbants (4) sont chauffés avec un ratio de chauffe moyen supérieur à 10⁹ K/s, de préférence supérieur à 10¹⁰ K/s, en particulier de préférence supérieur à 10¹¹ K/s pendant le temps de processus.

18. Procédé d'impression selon l'une des revendications 1 à 17, **caractérisé en ce que** l'épaisseur de la substance (2) d'impression sur le chromophore est choisie inférieure à 50 µm, de préférence inférieure à 30 µm, en particulier de préférence inférieure 20 µm.

19. Procédé d'impression selon l'une des revendications 1 à 18, **caractérisé en ce que** la substance (2) d'impression est choisie de telle sorte que la viscosité soit comprise entre 0,05 et 0,5 Pas.

20. Procédé d'impression selon l'une des revendications 1 à 19, dans lequel les corps absorbants (4) et substance (2) d'impression sont choisis de telle sorte que les corps absorbants (4) soient mouillés autant que possible par la substance (2) d'impression.

21. Procédé d'impression selon l'une des revendications 1 à 20, **caractérisé en ce qu'**une énergie inférieure à 10 _{µ}J, de préférence inférieure à 5 _{µ}J n'est plus que transmise pour générer un point d'impression de diamètre supérieur à 100 µm.

22. Procédé d'impression selon l'une des revendications 1 à 21, **caractérisé en ce que** l'impression s'effectue ligne par ligne, des zones à imprimer au sein d'une ligne étant formées par des segments de ligne dont la longueur et la position peuvent être librement choisies.

23. Procédé d'impression selon la revendication 22, **caractérisé en ce que** l'impression ligne par ligne s'effectue au moyen d'un laser en régime continu, qui trace les lignes d'impression ligne par ligne selon une trame donnée et peut être librement activé et désactivé voire masqué ou démasqué.

24. Machine d'impression pour imprimer une matière à imprimer, avec un chromophore (1) et un dispositif dégageant de l'énergie disposé de telle sorte que de l'énergie puisse être transmise de façon ciblée sur certaines zones du chromophore (1), des corps (4) absorbants étant prévus pour absorber l'énergie, **caractérisée en ce que** la machine d'impression est disposée de telle sorte que la substance d'impression liquide puisse passer du chromophore sur un médium de transfert d'impression et du médium de transfert d'impression sur la matière à imprimer.

25. Machine d'impression selon la revendication 24, **caractérisée en ce que** le dispositif dégageant de l'énergie est un laser.

26. Machine d'impression selon la revendication 24 ou 25, **caractérisée en ce que** les corps (4) absorbants ont une taille inférieure à 1 µm, de préférence inférieure à 200 nm et en particulier de préférence une taille comprise entre 10 et 50 nm.

27. Machine d'impression selon la revendication 26, **caractérisée en ce que** les corps absorbants sont composés de particules de suie et/ou de nitrure de titane.

28. Machine d'impression selon l'une des revendications 24 à 26, **caractérisée en ce que** les corps absorbants (4) forment une couche absorbante (9) disposée sur le chromophore (1).

29. Machine d'impression selon la revendication 28, **caractérisée en ce que** le chromophore (1) est de forme cylindrique et la couche absorbante (9) fixée sur le chromophore.

30. Machine d'impression selon la revendication 28, **caractérisée en ce que** la couche absorbante (9) est disposée sous forme de bande flexible sur le chromophore (1).

31. Machine d'impression selon l'une des revendications 28 à 30, **caractérisée en ce que** la proportion de corps absorbants (4) dans la couche absorbante (5) est supérieure à 40 % en poids, de préférence supérieure à 70 % en poids et en particulier de préférence supérieure à 90 % en poids.

32. Machine d'impression selon l'une des revendications 28 à 31, **caractérisée en ce que** la couche absorbante (9) est composée de corps absorbants (4) comprimés.

33. Machine d'impression selon l'une des revendications 28 à 32, **caractérisée en ce que** les corps absorbants (4) sont enrobés dans une matrice polymère organique ou anorganique.

34. Machine d'impression selon l'une des revendications 28 à 33, **caractérisée en ce que** les corps absorbants (4) sont enrobés dans une matrice élastomère, de préférence en caoutchouc.

35. Machine d'impression selon l'une des revendications 24 à 34, **caractérisée en ce que** le chromophore (1) présente une structure superficielle qui est composée de creux et/ou bosses.

36. Machine d'impression selon la revendication 35, **caractérisée en ce que** les creux et/ou bosses ont un diamètre inférieur à 30 µm, de préférence inférieur à 15 µm.

37. Machine d'impression selon la revendication 35 ou 36, **caractérisée en ce que** les creux et/ou bosses ont un diamètre supérieur à 2 µm.

38. Machine d'impression selon l'une des revendications 35 à 37, **caractérisée en ce que** les creux et/ou bosses ont des diamètres différents.

39. Machine d'impression selon l'une des revendications 35 à 38, **caractérisée en ce que** les creux et/ou bosses ont la forme de rainures.

40. Machine d'impression selon l'une des revendications 35 à 39, **caractérisée en ce que** les creux et/ou bosses sont disposés sur une couche absorbante qui contient les corps absorbants.

41. Machine d'impression selon l'une des revendications 24 à 40, **caractérisée en ce que** des éléments focalisant la lumière sont prévus sur le chromophore.

42. Machine d'impression selon la revendication 41, **caractérisée en ce que** les éléments focalisant la lumière ont un diamètre inférieur à 30 µm, de préférence inférieur à 10 µm.

43. Machine d'impression selon la revendication 41 ou 42, **caractérisée en ce que** le chromophore est transparent et **en ce que** les éléments focalisant la lumière sont intégrés dans le chromophore.

44. Machine d'impression selon l'une des revendications 41 à 43, **caractérisée en ce que** les éléments focalisant la lumière sont formés par une feuille polymère flexible.
